(19) Europäisches Patentamt
European Patent Office
Office européen des brevets

(11) **EP 4 554 106 A1**

(12) **EUROPEAN PATENT APPLICATION**
published in accordance with Art. 153(4) EPC

(43) Date of publication:
**14.05.2025 Bulletin 2025/20**

(21) Application number: **23835749.5**

(22) Date of filing: **29.06.2023**

(51) International Patent Classification (IPC):
**H04B 7/06** (2006.01)     **H04B 7/024** (2017.01)
**H04L 5/00** (2006.01)     **G06N 20/00** (2019.01)

(52) Cooperative Patent Classification (CPC):
**G06N 20/00; H04B 7/024; H04B 7/06; H04L 5/00**

(86) International application number:
**PCT/KR2023/009112**

(87) International publication number:
**WO 2024/010282 (11.01.2024 Gazette 2024/02)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.07.2022 KR 20220084429
06.04.2023 KR 20230045725**

(71) Applicant: **LG Electronics Inc.**
**Yeongdeungpo-gu**
**Seoul 07336 (KR)**

(72) Inventors:
• **PARK, Haewook**
  **Seoul 06772 (KR)**
• **KIM, Hyungtae**
  **Seoul 06772 (KR)**
• **KANG, Jiwon**
  **Seoul 06772 (KR)**
• **KIM, Seonwook**
  **Seoul 06772 (KR)**

(74) Representative: **Maikowski & Ninnemann**
**Patentanwälte Partnerschaft mbB**
**Postfach 15 09 20**
**10671 Berlin (DE)**

(54) **METHOD AND DEVICE FOR TRANSMITTING AND RECEIVING SIGNAL IN WIRELESS COMMUNICATION SYSTEM**

(57)     A terminal according to at least one of embodiments disclosed in the present specification may: receive a reference signal for CSI from a base station; calculate CSI on the basis of the reference signal; determine a plurality of CSI parts including a first CSI part and a second CSI part on the basis of the CSI; and transmit a CSI report on the basis of the plurality of CSI parts, wherein the calculated CSI includes artificial intelligence/machine learning (AI/ML) model-based CSI, the first CSI part includes information on a total number of bits of the AI/ML model-based CSI for all layers, and the second CSI part includes information on the number of bits for each layer of the AI/ML model-based CSI.

**FIG. 19**

- Receive RS for CSI — 1905
- Calculate CSI — 1910
- Determine CSI parts — 1915
- Transmit CSI report — 1920

EP 4 554 106 A1

**Description**

**TECHNICAL FIELD**

The disclosure relates to a wireless communication system, and more particularly, to a method and apparatus for transmitting/receiving an uplink/downlink wireless signal in a wireless communication system.

**BACKGROUND**

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

**DISCLOSURE**

**TECHNICAL PROBLEM**

An object of the disclosure is to provide a method of efficiently performing wireless signal transmission/reception procedures and an apparatus therefor.

It will be appreciated by persons skilled in the art that the objects that could be achieved with the disclosure are not limited to what has been particularly described hereinabove and the above and other objects that the disclosure could achieve will be more clearly understood from the following detailed description.

**TECHNICAL SOLUTION**

In an aspect of the present disclosure, provided herein is a method of transmitting channel state information (CSI) by a user equipment (UE) in a wireless communication system. The method may include: receiving a reference signal for CSI from a base station (BS); calculating the CSI based on the reference signal; determining a plurality of CSI parts, including a first CSI part and a second CSI part, based on the CSI; and transmitting a CSI report based on the plurality of CSI parts. The calculated CSI may include artificial intelligence/machine learning (AI/ML) model-based CSI. The first CSI part may include information regarding a total number of bits of the AI/ML model-based CSI across all layers, and the second CSI part may include information regarding a number of bits for each layer of the AI/ML model-based CSI.

The second CSI part may further include information regarding accuracy of the AI/ML model-based CSI. The information regarding the accuracy may be provided for each layer.

At least one of information regarding a spatial/frequency domain unit related to the AI/ML model-based CSI, information regarding granularity related to the AI/ML model-based CSI, or information regarding quantization related to the AI/ML model-based CSI may be further included.

The AI/ML model-based CSI may be related to multiple transmission reception points (TRPs). The AI/ML model-based CSI may include information regarding a channel state information reference signal (CSI-RS) port for each of the related TRPs. The AI/ML model-based CSI may be provided commonly for the multiple TRPs or individually for each TRP.

An AI/ML model may be configured individually for each layer.

The second CSI part may include first AI/ML model-based CSI for a first layer and second AI/ML model-based CSI for a second layer. A number of bits of the first AI/ML model-based CSI and a number of bits of the second AI/ML model-based CSI may be different from each other.

The plurality of CSI parts may include a third CSI part, and the third CSI part may include AI/ML model-based CSI for each layer.

In another aspect of the present disclosure, provided herein is a computer-readable recording medium having recorded thereon a program for executing the CSI transmission method described above.

In another aspect of the present disclosure, provided herein is a UE configured to perform the CSI transmission method described above.

In another aspect of the present disclosure, provided herein is a device configured to control a UE performing the CSI transmission method described above.

In another aspect of the present disclosure, provided herein is a method of receiving CSI by a BS. The method may include: transmitting a reference signal for CSI; receiving a CSI report for the reference signal from a UE; and obtaining a plurality of CSI parts, including a first CSI part and a second CSI part, from the CSI report. The CSI report may include AI/ML model-based CSI. The first CSI part may include information regarding a total number of bits of the AI/ML model-based CSI across all layers, and the second CSI part may include information regarding a number of bits for each layer of the AI/ML model-based CSI.

In a further aspect of the present disclosure, provided herein is a BS configured to perform the CSI reception method described above.

## ADVANTAGEOUS EFFECTS

According to the disclosure, wireless signal transmission and reception may be efficiently performed in a wireless communication system.

It will be appreciated by persons skilled in the art that the effects that can be achieved with the disclosure are not limited to what has been particularly described hereinabove and other advantages of the disclosure will be more clearly understood from the following detailed description taken in conjunction with the accompanying drawings.

## BRIEF DESCRIPTION OF THE DRAWINGS

FIG. 1 illustrates physical channels used in a 3rd generation partnership project (3GPP) system as an exemplary wireless communication system, and a general signal transmission method using the same.

FIG. 2 illustrates a radio frame structure.

FIG. 3 illustrates a resource grid of a slot.

FIG. 4 illustrates exemplary mapping of physical channels in a slot.

FIG. 5 illustrates an exemplary physical downlink shared channel (PDSCH) and ACK/NACK transmission and reception process.

FIG. 6 illustrates an exemplary physical uplink shared channel (PUSCH) transmission process.

FIG. 7 shows an example of a channel state information (CSI) related procedure.

FIG. 8 is a view for explaining a concept of artificial intelligence/machine learning (AI/ML)/deep learning.

FIGS. 9 to 12 show various AI/ML models of deep learning.

FIG. 13 is a diagram illustrating split AI inference.

FIG. 14 is a diagram illustrating a framework for 3GPP radio access network (RAN) intelligence.

FIGS. 15 to 17 illustrate AI model training and inference environments.

FIG. 18 is a diagram for explaining a CSI reporting method based on an auto-encoder.

FIG. 19 is a diagram for explaining operations of a user equipment (UE) according to an embodiment.

FIG. 20 is a diagram for explaining operations of a base station (BS) according to an embodiment.

FIGS. 21 to 24 illustrate an example of a communication system 1 and wireless devices applied to the disclosure.

FIG. 25 illustrates an exemplary discontinuous reception (DRX) operation applicable to the disclosure.

## DETAILED DESCRIPTION

Embodiments of the disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In the disclosure, for simplicity, this technology will be referred to as NR (New Radio or New RAT).

For the sake of clarity, 3GPP NR is mainly described, but the technical idea of the disclosure is not limited thereto.

In the disclosure, the term "set/setting" may be replaced with "configure/configuration", and both may be used interchangeably. Further, a conditional expression (e.g., "if", "in a case", or "when") may be replaced by "based on that" or "in a state/status". In addition, an operation or software/hardware (SW/HW) configuration of a user equipment (UE)/base station (BS) may be derived/understood based on satisfaction of a corresponding condition. When a process on a receiving (or transmitting) side may be derived/understood from a process on the transmitting (or receiving) side in signal transmission/reception between wireless communication devices (e.g., a BS and a UE), its description may be omitted. Signal determination/generation/encoding/transmission of the transmitting side, for example, may be understood as signal monitoring reception/decoding/determination of the receiving side. Further, when it is said that a UE performs (or does not perform) a specific operation, this may also be interpreted as that a BS expects/assumes (or does not expect/assume) that the UE performs the specific operation. When it is said that a BS performs (or does not perform) a specific operation, this may also be interpreted as that a UE expects/assumes (or does not expect/assume) that the BS performs the specific operation. In the following description, sections, embodiments, examples, options, methods, schemes, and so on are distinguished from each other and indexed, for convenience of description, which does not mean that each of them necessarily constitutes an independent invention or that each of them should be implemented only individually. Unless explicitly contradicting each other, it may be derived/understood that at least some of the sections, embodiments, examples, options, methods, schemes, and so on may be implemented in combination or may be omitted.

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

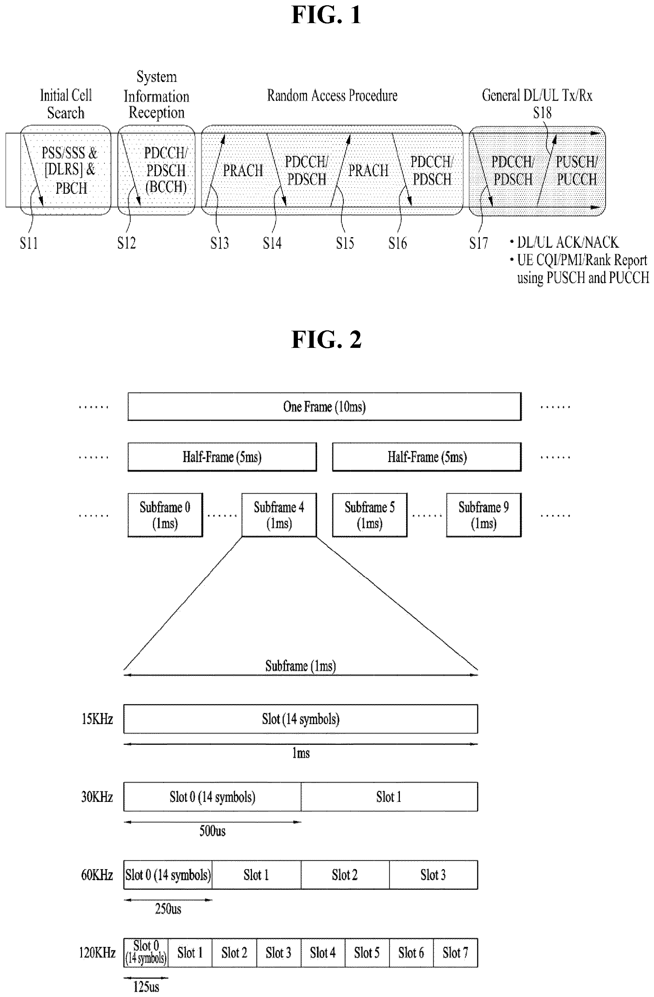

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S102.

The UE may perform a random access procedure to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

FIG. 2 illustrates a radio frame structure. In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

[Table 1]

| SCS (15*2$^u$) | N$^{slot}_{symb}$ | N$^{frame,u}_{slot}$ | N$^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |
| N$^{slot}_{symb}$: Number of symbols in a slot<br>N$^{frame,u}_{slot}$: Number of slots in a frame<br>N$^{subframe,u}_{slot}$: Number of slots in a subframe | | | |

Table 2 illustrates that the number of symbols per slot, the number of slots per frame, and the number of slots per subframe vary according to the SCS when the extended CP is used.

[Table 2]

| SCS (15*2$^u$) | N$^{slot}_{symb}$ | N$^{frame,u}_{slot}$ | N$^{subframe,u}_{slot}$ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

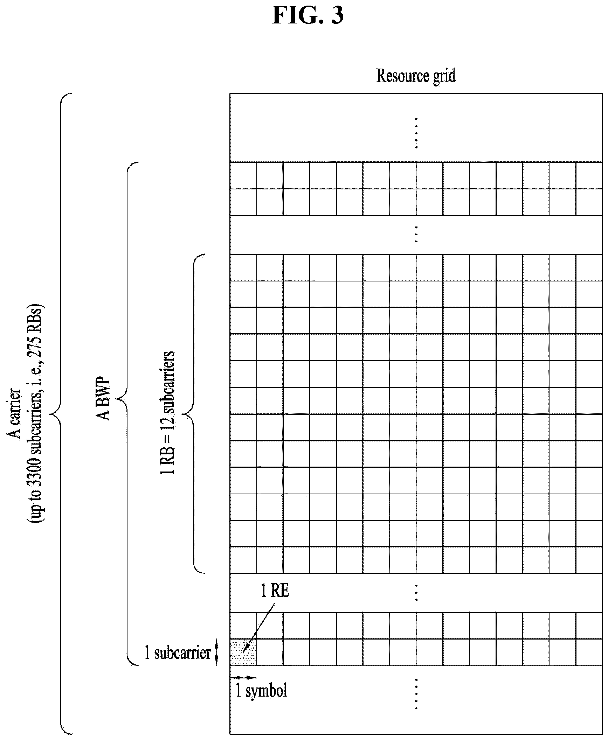

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

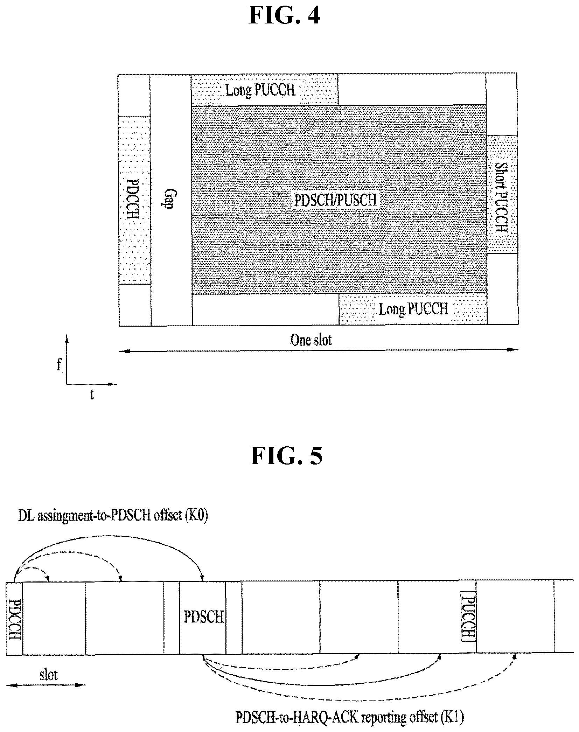

FIG. 4 illustrates exemplary mapping of physical channels in a slot. A PDCCH may be transmitted in a DL control region, and a PDSCH may be transmitted in a DL data region. A PUCCH may be transmitted in a UL control region, and a PUSCH may be transmitted in a UL data region. A guard period (GP) provides a time gap for transmission mode-to-reception mode switching or reception mode-to-transmission mode switching at a BS and a UE. Some symbol at the time of DL-to-UL switching in a subframe may be configured as a GP.

Each physical channel will be described below in greater detail.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g. a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

The PDCCH includes 1, 2, 4, 8, or 16 control channel elements (CCEs) according to its aggregation level (AL). A CCE is a logical allocation unit used to provide a PDCCH with a specific code rate according to a radio channel state. A CCE includes 6 resource element groups (REGs), each REG being defined by one OFDM symbol by one (P)RB. The PDCCH is transmitted in a control resource set (CORESET). A CORESET is defined as a set of REGs with a given numerology (e.g.,

an SCS, a CP length, and so on). A plurality of CORESETs for one UE may overlap with each other in the time/frequency domain. A CORESET may be configured by system information (e.g., a master information block (MIB)) or UE-specific higher-layer signaling (e.g., radio resource control (RRC) signaling). Specifically, the number of RBs and the number of symbols (3 at maximum) in the CORESET may be configured by higher-layer signaling.

For PDCCH reception/detection, the UE monitors PDCCH candidates. A PDCCH candidate is CCE(s) that the UE should monitor to detect a PDCCH. Each PDCCH candidate is defined as 1, 2, 4, 8, or 16 CCEs according to an AL. The monitoring includes (blind) decoding PDCCH candidates. A set of PDCCH candidates decoded by the UE are defined as a PDCCH search space (SS). An SS may be a common search space (CSS) or a UE-specific search space (USS). The UE may obtain DCI by monitoring PDCCH candidates in one or more SSs configured by an MIB or higher-layer signaling. Each CORESET is associated with one or more SSs, and each SS is associated with one CORESET. An SS may be defined based on the following parameters.

- controlResourceSetId: A CORESET related to an SS.
- monitoringSlotPeriodicityAndOffset: A PDCCH monitoring periodicity (in slots) and a PDCCH monitoring offset (in slots).
- monitoringSymbolsWithinSlot: PDCCH monitoring symbols in a slot (e.g., the first symbol(s) of a CORESET).
- nrofCandidates: The number of PDCCH candidates (one of 0, 1, 2, 3, 4, 5, 6, and 8) for each AL={1, 2, 4, 8, 16}.

\* An occasion (e.g., time/frequency resources) in which the UE is to monitor PDCCH candidates is defined as a PDCCH (monitoring) occasion. One or more PDCCH (monitoring) occasions may be configured in a slot.

Table 3 shows the characteristics of each SS.

[Table 3]

| Type | Search Space | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB Decoding |
| Type1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| | UE Specific | C-RNTI, or MCS-C-RNTI, or CS-RNTI(s) | User specific PDSCH decoding |

Table 4 shows DCI formats transmitted on the PDCCH.

[Table 4]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., a dynamic slot format indicator (SFI)) to a UE, and DCI format 2_1 is used to deliver DL pre-emption information to a UE. DCI format 2_0 and/or DCI format 2_1 may be delivered to a corresponding group of UEs on a group common PDCCH which is a PDCCH directed to a group of UEs.

DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

The PDSCH conveys DL data (e.g., DL-shared channel transport block (DL-SCH TB)) and uses a modulation scheme such as quadrature phase shift keying (QPSK), 16-ary quadrature amplitude modulation (16QAM), 64QAM, or 256QAM. A TB is encoded into a codeword. The PDSCH may deliver up to two codewords. Scrambling and modulation mapping may be performed on a codeword basis, and modulation symbols generated from each codeword may be mapped to one or more layers. Each layer together with a demodulation reference signal (DMRS) is mapped to resources, and an OFDM symbol signal is generated from the mapped layer with the DMRS and transmitted through a corresponding antenna port.

The PUCCH delivers uplink control information (UCI). The UCI includes the following information.

- SR (Scheduling Request): Information used to request UL-SCH resources.
- HARQ (Hybrid Automatic Repeat reQuest)-ACK (Acknowledgement): A response to a DL data packet (e.g., codeword) on the PDSCH. An HARQ-ACK indicates whether the DL data packet has been successfully received. In response to a single codeword, a 1-bit of HARQ-ACK may be transmitted. In response to two codewords, a 2-bit HARQ-ACK may be transmitted. The HARQ-ACK response includes positive ACK (simply, ACK), negative ACK (NACK), discontinuous transmission (DTX) or NACK/DTX. The term HARQ-ACK is interchangeably used with HARQ ACK/NACK and ACK/NACK.
- CSI (Channel State Information): Feedback information for a DL channel. Multiple input multiple output (MIMO)-related feedback information includes an RI and a PMI.

Table 5 illustrates exemplary PUCCH formats. PUCCH formats may be divided into short PUCCHs (Formats 0 and 2) and long PUCCHs (Formats 1, 3, and 4) based on PUCCH transmission durations.

[Table 5]

| PUCCH format | Length in OFDM symbols $N_{symb}^{PUCCH}$ | Number of bits | Usage | Etc |
|---|---|---|---|---|
| 0 | 1 - 2 | $\leq 2$ | HARQ, SR | Sequence selection |
| 1 | 4 - 14 | $\leq 2$ | HARQ, [SR] | Sequence modulation |
| 2 | 1 - 2 | >2 | HARQ, CSI, [SR] | CP-OFDM |
| 3 | 4 - 14 | >2 | HARQ, CSI, [SR] | DFT-s-OFDM (no UE multiplexing) |
| 4 | 4 - 14 | >2 | HARQ, CSI, [SR] | DFT-s-OFDM (Pre DFT OCC) |

PUCCH format 0 conveys UCI of up to 2 bits and is mapped in a sequence-based manner, for transmission. Specifically, the UE transmits specific UCI to the BS by transmitting one of a plurality of sequences on a PUCCH of PUCCH format 0. Only when the UE transmits a positive SR, the UE transmits the PUCCH of PUCCH format 0 in PUCCH resources for a corresponding SR configuration.

PUCCH format 1 conveys UCI of up to 2 bits and modulation symbols of the UCI are spread with an orthogonal cover code (OCC) (which is configured differently whether frequency hopping is performed) in the time domain. The DMRS is transmitted in a symbol in which a modulation symbol is not transmitted (i.e., transmitted in time division multiplexing (TDM)).

PUCCH format 2 conveys UCI of more than 2 bits and modulation symbols of the DCI are transmitted in frequency division multiplexing (FDM) with the DMRS. The DMRS is located in symbols #1, #4, #7, and #10 of a given RB with a density of 1/3. A pseudo noise (PN) sequence is used for a DMRS sequence. For 2-symbol PUCCH format 2, frequency hopping may be activated.

PUCCH format 3 does not support UE multiplexing in the same PRBS, and conveys UCI of more than 2 bits. In other words, PUCCH resources of PUCCH format 3 do not include an OCC. Modulation symbols are transmitted in TDM with the DMRS.

PUCCH format 4 supports multiplexing of up to 4 UEs in the same PRBS, and conveys UCI of more than 2 bits. In other words, PUCCH resources of PUCCH format 3 include an OCC. Modulation symbols are transmitted in TDM with the DMRS.

At least one of one or two or more cells configured in the UE may be configured for PUCCH transmission. At least the primary cell may be configured as a cell for PUCCH transmission. At least one PUCCH cell group may be configured in a UE based on at least one cell for which PUCCH transmission is configured, and each PUCCH cell group includes one or more cells. A PUCCH cell group may be simply referred to as a PUCCH group. PUCCH transmission may be configured for a SCell as well as the primary cell. The primary cell belongs to the primary PUCCH group, and the PUCCH-SCell to which PUCCH transmission is configured belongs to the secondary PUCCH group. The PUCCH on the primary cell may be used for cells belonging to the primary PUCCH group, and the PUCCH on the PUCCH-SCell may be used for cells belonging to the secondary PUCCH group.

The PUSCH delivers UL data (e.g., UL-shared channel transport block (UL-SCH TB)) and/or UCI based on a CP-OFDM waveform or a DFT-s-OFDM waveform. When the PUSCH is transmitted in the DFT-s-OFDM waveform, the UE transmits the PUSCH by transform precoding. For example, when transform precoding is impossible (e.g., disabled), the UE may transmit the PUSCH in the CP-OFDM waveform, while when transform precoding is possible (e.g., enabled), the UE may transmit the PUSCH in the CP-OFDM or DFT-s-OFDM waveform. A PUSCH transmission may be dynamically scheduled by a UL grant in DCI, or semi-statically scheduled by higher-layer (e.g., RRC) signaling (and/or Layer 1 (L1) signaling such as a PDCCH) (configured scheduling or configured grant). The PUSCH transmission may be performed in a codebook-based or non-codebook-based manner.

FIG. 5 illustrates an exemplary ACK/NACK transmission process. Referring to FIG. 5, the UE may detect a PDCCH in slot #n. The PDCCH includes DL scheduling information (e.g., DCI format 1_0 or DCI format 1_1). The PDCCH indicates a DL assignment-to-PDSCH offset, K0 and a PDSCH-to-HARQ-ACK reporting offset, K1. For example, DCI format 1_0 and DCI format 1_1 may include the following information.

- Frequency domain resource assignment: Indicates an RB set assigned to a PDSCH.
- Time domain resource assignment: Indicates K0 and the starting position (e.g. OFDM symbol index) and length (e.g. the number of OFDM symbols) of the PDSCH in a slot
- PDSCH-to-HARQ_feedback timing indicator: Indicates K1.
- HARQ process number (4 bits): Indicates the HARQ process ID of data (e.g., a PDSCH or TB).
- PUCCH resource indicator (PRI): Indicates a PUCCH resource to be used for UCI transmission among a plurality of PUCCH resources in a PUCCH resource set.

After receiving a PDSCH in slot #(n+K0) according to the scheduling information of slot #n, the UE may transmit UCI on a PUCCH in slot #(n+K1). The UCI may include an HARQ-ACK response to the PDSCH. FIG. 5 is based on the assumption that the SCS of the PDSCH is equal to the SCS of the PUCCH, and slot #n1=slot #(n+K0), for convenience, which should not be construed as limiting the disclosure. When the SCSs are different, K1 may be indicated/interpreted based on the SCS of the PUCCH.

In the case where the PDSCH is configured to carry one TB at maximum, the HARQ-ACK response may be configured in one bit. In the case where the PDSCH is configured to carry up to two TBs, the HARQ-ACK response may be configured in 2 bits if spatial bundling is not configured and in 1 bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

Whether the UE should perform spatial bundling for an HARQ-ACK response may be configured for each cell group (e.g., by RRC/higher layer signaling). For example, spatial bundling may be configured for each individual HARQ-ACK response transmitted on the PUCCH and/or HARQ-ACK response transmitted on the PUSCH.

When up to two (or two or more) TBs (or codewords) may be received at one time (or schedulable by one DCI) in a corresponding serving cell (e.g., when a higher layer parameter maxNrofCodeWordsScheduledByDCI indicates 2 TBs), spatial bundling may be supported. More than four layers may be used for a 2-TB transmission, and up to four layers may be used for a 1-TB transmission. As a result, when spatial bundling is configured for a corresponding cell group, spatial bundling may be performed for a serving cell in which more than four layers may be scheduled among serving cells of the cell group. A UE which wants to transmit an HARQ-ACK response through spatial bundling may generate an HARQ-ACK response by performing a (bit-wise) logical AND operation on A/N bits for a plurality of TBs.

For example, on the assumption that the UE receives DCI scheduling two TBs and receives two TBs on a PDSCH based on the DCI, a UE that performs spatial bundling may generate a single A/N bit by a logical AND operation between a first A/N bit for a first TB and a second A/N bit for a second TB. As a result, when both the first TB and the second TB are ACKs, the UE reports an ACK bit value to a BS, and when at least one of the TBs is a NACK, the UE reports a NACK bit value to the BS.

For example, when only one TB is actually scheduled in a serving cell configured for reception of two TBs, the UE may generate a single A/N bit by performing a logical AND operation on an A/N bit for the one TB and a bit value of 1. As a result, the UE reports the A/N bit for the one TB to the BS.

There are plurality of parallel DL HARQ processes for DL transmissions at the BS/UE. The plurality of parallel HARQ processes enable continuous DL transmissions, while the BS is waiting for an HARQ feedback indicating successful or failed reception of a previous DL transmission. Each HARQ process is associated with an HARQ buffer in the medium access control (MAC) layer. Each DL HARQ process manages state variables such as the number of MAC physical data unit (PDU) transmissions, an HARQ feedback for a MAC PDU in a buffer, and a current redundancy version. Each HARQ process is identified by an HARQ process ID.

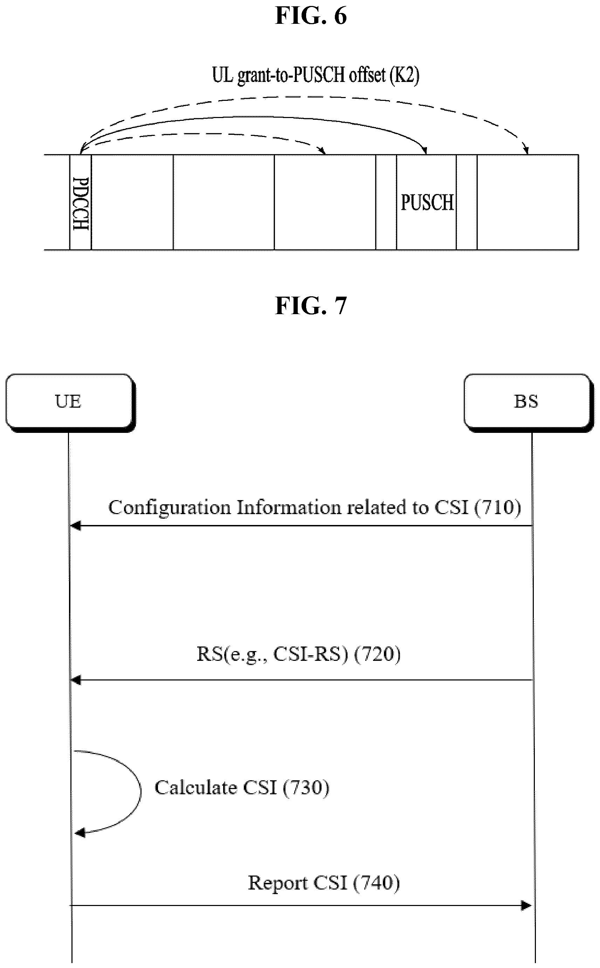

FIG. 6 illustrates an exemplary PUSCH transmission procedure. Referring to FIG. 6, the UE may detect a PDCCH in slot #n. The PDCCH includes DL scheduling information (e.g., DCI format 1_0 or 1_1). DCI format 1_0 or 1_1 may include the following information.

- Frequency domain resource assignment: Indicates an RB set assigned to the PUSCH.
- Time domain resource assignment: Indicates a slot offset K2 and the starting position (e.g. OFDM symbol index) and duration (e.g. the number of OFDM symbols) of the PUSCH in a slot. The starting symbol and length of the PUSCH may be indicated by a start and length indicator value (SLIV), or separately.

The UE may then transmit a PUSCH in slot #(n+K2) according to the scheduling information in slot #n. The PUSCH includes a UL-SCH TB.

CSI related operation

FIG. 7 shows an example of a CSI related procedure.

The UE receives configuration information related to CSI from the BS via RRC signaling (710). The CSI-related configuration information may include at least one of channel state information-interference measurement (CSI-IM)-related information, CSI measurement-related information, CSI resource configuration-related information, CSI-RS resource-related information, or CSI report configuration-related information.

- A CSI-IM resource may be configured for interference measurement (IM) of the UE. In the time domain, the CSI-IM resource set may be configured periodic, semi-persistent, or aperiodic. The CSI-IM resource may be configured to zero power (ZP)-CSI-RS for the UE. ZP-CSI-RS may be configured to be distinguished from non-zero power (NZP)-CSI-RS.
- The UE may assume that CSI-RS resource(s) for channel measurement configured for one CSI reporting and CSI-IM/NZP CSI-RS resource(s) for interference measurement have a QCL relationship with respect to 'QCL-TypeD' for each resource (when NZP CSI-RS resource(s) are used for interference measurement).
- CSI resource configuration may include at least one of a CSI-IM resource for interference measurement, an NZP CSI-RS resource for interference measurement, and an NZP CSI-RS resource for channel measurement. The channel measurement resource (CMR) may be a NZP CSI-RS for CSI acquisition, and the interference measurement resource (IMR) may be an NZP CSI-RS for CSI-IM and IM.
- A CSI-RS may be configured for one or more UEs. Different CSI-RS configurations may be provided for each UE, or the same CSI-RS configuration may be provided to a plurality of UEs. The CSI-RS may support up to 32 antenna ports. CSI-RSs corresponding to N (N being 1 or more) antenna ports may be mapped to N RE locations within a time-frequency unit corresponding to one slot and one RB. When N is 2 or more, N-port CSI-RSs may be multiplexed in CDM, FDM and/or TDM methods. The CSI-RS may be mapped to the remaining REs except for REs to which CORESET, DMRS, and SSB are mapped. In the frequency domain, the CSI-RS may be configured for the entire bandwidth, a partial bandwidth part (BWP), or a partial bandwidth. The CSI-RS may be transmitted in each RB within the bandwidth in which the CSI-RS is configured (i.e., density = 1), or the CSI-RS may be transmitted in every second RB (e.g., even or odd RB) (i.e., density = 1/2). When the CSI-RS is used as a tracking reference signal (TRS), a single-port CSI-RS may be mapped on three subcarriers in each resource block (i.e., density = 3). One or more CSI-RS resource sets may be configured for the UE in the time domain. Each CSI-RS resource set may include one or more CSI-RS configurations. Each CSI-RS resource set may be configured periodic, semi-persistent, or aperiodic.
- The CSI report configuration may include configuration for a feedback type, a measurement resource, a report type, and the like. The NZP-CSI-RS resource set may be used for CSI reporting configuration of a corresponding UE. An NZP-CSI-RS resource set may be associated with the CSI-RS or the SSB. A plurality of periodic NZP-CSI-RS resource sets may be configured as TRS resource sets. (i) The feedback types include a channel quality indicator (CQI), a precoding matrix indicator (PMI), a CSI-RS resource indicator (CRI), an SSB resource block indicator (SSBRI), a layer indicator (LI), a rank indicator (RI), a first layer (L1)-reference signal received strength (RSRP), and the like. (ii) The measurement resource may include configuration for a downlink signal and/or downlink resource on which measurement is performed by the UE to determine feedback information. The measurement resource may be configured as a ZP and/or NZP CSI-RS resource set associated with the CSI report configuration. The NZP CSI-RS resource set may include a CSI-RS set or an SSB set. For example, the L1-RSRP may be measured for a CSI-RS set or for an SSB set. (iii) The report type may include configuration for a time when the UE performs a report and an uplink channel. The reporting time may be configured to be periodic, semi-persistent or aperiodic. The periodic CSI report may be transmitted on a PUCCH. The semi-persistent CSI report may be transmitted on a PUCCH or a PUSCH based on a MAC CE indicating activation/deactivation. The aperiodic CSI report may be indicated by DCI signaling. For example, a CSI request field of an uplink grant may indicate one of various report trigger sizes. The aperiodic CSI report may be transmitted on a PUSCH.

The UE measures CSI based on configuration information related to CSI. The CSI measurement may include receiving the CSI-RS (720) and acquiring the CSI by computing the received CSI-RS (730).

The UE may transmit a CSI report to the BS (740). For the CSI report, the time and frequency resource available to the UE are controlled by the BS. Channel state information (CSI) includes at least one of a channel quality indicator (CQI), a precoding matrix indicator (PMI), a CSI-RS resource indicator (CRI), a SS/PBCH block resource indicator (SSBRI), a layer indicator (LI), a rank indicator (RI), an L1-RSRP, and/or an L-SINR.

A time domain behavior of CSI reporting supports periodic, semi-persistent, aperiodic. i) Periodic CSI reporting is performed in a short PUCCH, a long PUCCH. Periodicity and a slot offset of periodic CSI reporting may be configured by RRC and refers to a CSI-ReportConfig IE. ii) SP (semi-periodic) CSI reporting is performed in a short PUCCH, a long PUCCH, or a PUSCH. For SP CSI in a short/long PUCCH, periodicity and a slot offset are configured by RRC and a CSI report is activated/deactivated by separate MAC CE/DCI. For SP CSI in a PUSCH, periodicity of SP CSI reporting is configured by RRC, but a slot offset is not configured by RRC and SP CSI reporting is activated/deactivated by DCI (format 0_1). For SP CSI reporting in a PUSCH, a separated RNTI (SP-CSI C-RNTI) is used. An initial CSI report timing follows a PUSCH time domain allocation value indicated by DCI and a subsequent CSI report timing follows a periodicity configured by RRC. DCI format 0_1 may include a CSI request field and activate/deactivate a specific configured SP-CSI trigger state. SP CSI reporting has activation/deactivation equal or similar to a mechanism having data transmission in a SPS PUSCH. iii) Aperiodic CSI reporting is performed in a PUSCH and is triggered by DCI. In this case, information related to trigger of aperiodic CSI reporting may be delivered/indicated/configured through MAC-CE. For AP CSI having an AP CSI-RS, AP CSI-RS timing is configured by RRC and timing for AP CSI reporting is dynamically controlled by DCI.

A CSI codebook (e.g., PMI codebook) defined in the NR specifications may be broadly classified into a Type I codebook and a Type II codebook. The Type I codebook mainly targets single user MIMO (SU-MIMO) that supports both a high order and a low order. The Type II codebook primarily supports multi-user MIMO (MU-MIMO), which is capable of handling a maximum of two layers. While the Type II codebook is capable of providing more accurate CSI compared to Type I, the Type II codebook may also increase signaling overhead. On the other hand, an Enhanced Type II codebook is introduced to address the CSI overhead issues associated with the existing Type II codebook. The Enhanced Type II codebook may reduce the payload of the codebook by considering the correlation in the frequency domain.

CSI reporting over a PUSCH may be configured as Part 1 and Part 2. Part 1 has a fixed payload size and is used to identify the number of information bits in Part 2. Part 1 is fully transmitted before Part 2.

- For the Type I CSI feedback, Part 1 includes an RI (if reported), a CRI (if reported), and the CQI of a first codeword. Part 2 includes a PMI, and when RI > 4, Part 2 also includes the CQI.

For the Type II CSI feedback, Part 1 includes an RI (if reported), a CQI, and an indication of the number of non-zero WB amplitude coefficients for each layer of Type II CSI. Part 2 includes the PMI of the Type II CSI.

- For the Enhanced Type II CSI feedback, Part 1 includes an RI (if reported), a CQI, and an indication of the total number of non-zero WB amplitude coefficients for all layers of Enhanced Type II CSI. Part 2 includes the PMI of the Enhanced Type II CSI.

For the PUSCH, CSI reporting includes two parts. If the CSI payload to be reported is smaller than a payload size provided by PUSCH resources allocated for CSI reporting, the UE may drop parts of the Part 2 CSI.

Semi-persistent CSI reporting performed with PUCCH format 3 or 4 supports Type II CSI feedback but supports only Part 1 of Type II CSI feedback.

Quasi-co location (QCL)

When the channel property of an antenna port is to be inferred from a channel of another antenna port, the two antenna ports are quasi co-located. The channel property may include one or more of delay spread, Doppler spread, frequency/Doppler shift, average received power, received Timing/average delay, and a spatial RX parameter.

A list of a plurality of TCI-state configurations may be configured in the UE through a higher layer parameter PDSCH-Config. Each TCI-state is linked to a QCL configuration parameter between one or two DL reference signals and the DM-RS port of a PDSCH. The QCL may include qcl-Type1 for a first DL RS and qcl-Type2 for a second DL RS. The QCL type may correspond to one of the following.

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

Beam Management (BM)

The BM refers to a series of processes for acquiring and maintaining a set of BS beams (transmission and reception point (TRP) beams) and/or a set of UE beams available for DL and UL transmission/reception. The BM may include the following processes and terminology.

- Beam measurement: an operation by which the BS or UE measures the characteristics of a received beamformed signal
- Beam determination: an operation by which the BS or UE selects its Tx/Rx beams
- Beam sweeping: an operation of covering a spatial domain by using Tx and/or Rx beams for a prescribed time interval according to a predetermined method
- Beam report: an operation by which the UE reports information about a signal beamformed based on the beam measurement.

The BM procedure may be divided into (1) a DL BM procedure using an SSB or CSI-RS and (2) a UL BM procedure using an SRS. Further, each BM procedure may include Tx beam sweeping for determining a Tx beam, and Rx beam sweeping for determining an Rx beam.

The DL BM procedure may include (1) transmission of beamformed DL RSs (e.g., CSI-RS or SSB) from the BS and (2) beam reporting from the UE.

A beam report may include preferred DL RS ID(s) and reference signal received power(s) (RSRP(s)) corresponding to the preferred DL RS ID(s). A DL RS ID may be an SSB resource indicator (SSBRI) or a CSI-RS resource indicator (CRI).

Artificial intelligence/machine learning (AI/ML)

With the technological development of AI/ML, node(s) and UE(s) constituting a wireless communication network are becoming intelligent/advanced, and in particular, due to intelligence of a network/BS, it is expected that various network/BS determination parameter values (e.g., transmission and reception power of each BS, transmission power of each UE, precoder/beam of BS/UE, time/frequency resource allocation for each UE, or a duplex method of BS) are rapidly optimized and derived/applied according to various environmental parameters (e.g., distribution/location of BSs, distribution/location/material of building/furniture, location/moving direction/speed of UEs, and climate information). In line with this trend, many standardization organizations (e.g., 3GPP or O-RAN) consider introduction of the network/BS determination parameter values, and research on this is also actively underway.

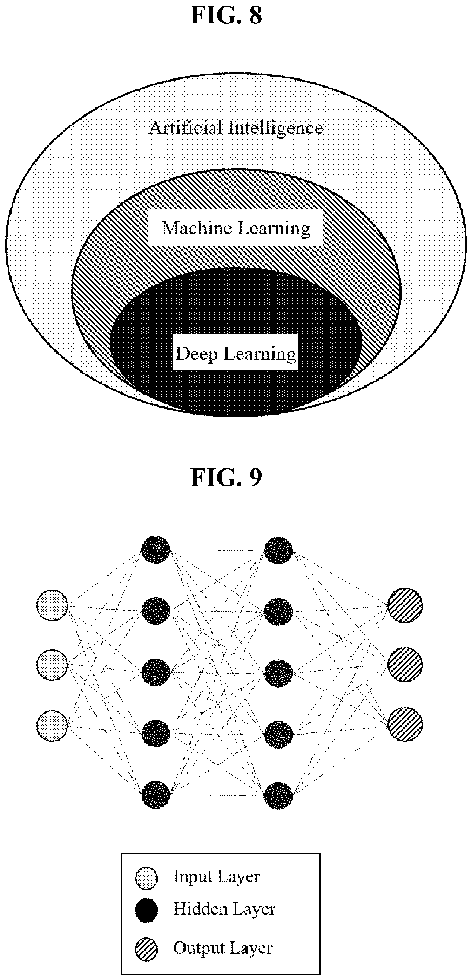

In a narrow sense, AI/ML may be easily referred to as deep learning-based artificial intelligence, but is conceptually shown in FIG. 8.

- Artificial intelligence: This may correspond to all automation by which machines replace a human work.
- Machine learning: Without explicitly programming rules, machines may learn patterns for decision-making on their own from data.
- Deep learning: This is an artificial neural network-based AI/ML model in which a machine performs all at once from unstructured data to feature extraction and determination and an algorithm depends upon a biological nervous system, that is, a multi-layer network of interconnected nodes for feature extraction and transformation inspired by a neural network. A common deep learning network architecture may include deep neural networks (DNNs), recurrent neural networks (RNNs) and convolutional neural networks (CNNs).

Classification of types of AI/ML according to various references

1. Offline vs Online

(1) Offline Learning: This complies with a sequential procedure of database collection, learning, and prediction. In other words, collection and learning are performed offline, and the completed program may be installed in the field and used for prediction. In most situations, this offline learning method is used. In offline learning, the system does not learn incrementally. Instead, learning is performed using all available collected data, and the results are applied without further learning. If learning on new data becomes necessary, learning may be initiated again using new complete data.
(2) Online Learning: Online learning is a method of improving performance little by little by incrementally learning with additionally generated data based on the fact that data to be used for learning is continuously generated recently through the Internet. Real-time learning is performed on specific units of data (batches) collected online, thereby allowing the system to quickly adapt to varying data.

To build an AI system, learning may be performed solely through online learning using only data generated in real-time. Alternatively, after conducting offline learning using a specific data set, additional learning may be performed using subsequently generated real-time data (online + offline learning).

2. Classification according to AI/ML Framework concept

(1) Centralized Learning: When training data collected from a plurality of different nodes is reported to a centralized node, all data resources/storage/learning (e.g., supervised, unsupervised, and reinforcement learning) are performed by one central node.
(2) Federated Learning: A collective AI/ML model is configured based on data across decentralized data owners. Instead of using data into an AI/ML model, a local node/individual device collects data and a train a copy of the AI/ML model thereof, and thus it is not required to report source data to a central node. In federated learning, a parameter/-weight of the AI/ML model may be transmitted back to the centralized node to support general AI/ML model training. An advantage of federated learning includes increased computation speed and superiority in terms of information security. That is, a process of uploading personal data to a central server is unnecessary, and leakage and abuse of personal information may be prevented.
(3) Distributed Learning: The machine learning process represents a concept that is scaled and deployed across a cluster of nodes. A training AI/ML model is split and shared across multiple nodes operating concurrently to speed up AI/ML model training.

3. Classification according to learning method

(1) Supervised Learning: Supervised learning is a machine learning task that aims to learn a mapping function from input to output when a labeled data set is given. The input data is called training data and has known labels or outcomes. An example of the supervised learning may include (i) Regression: Linear Regression, Logistic Regression, (ii) Instance-based Algorithms: k-Nearest Neighbor (KNN), (iii) Decision Tree Algorithms: CART, (iv) Support Vector Machines: SVM, (v) Bayesian Algorithms: Naive Bayes, and (vi) Ensemble Algorithms: Extreme Gradient Boosting, Bagging: Random Forest. The supervised learning may be further grouped due to regression and classification problems, and classification predicts a label and regression predicts a quantity.
(2) Unsupervised Learning: This is a machine learning task that aims to learn a function that describes a hidden structure in unlabeled data. Input data is unlabeled and has no known results. Some examples of unsupervised learning include K-means clustering, principal component analysis (PCA), nonlinear independent component analysis (ICA), and LSTM.
(3) Reinforcement Learning: In reinforcement learning (RL), an agent aims to optimize a long-term goal by interacting with an environment based on a trial-and-error process, which is goal-oriented learning based on an interaction with the environment. Examples of an RL algorithm may include (i) Q-learning, (ii) Multi-armed bandit learning, (iii) Deep Q Network, State-Action-Reward-State-Action (SARSA), (iv) Temporal Difference Learning, (v) Actor-critic reinforcement learning, (vi) Deep deterministic policy gradient, and (vii) Monte-Carlo tree search. The RL may be further grouped into AI/ML model-based RL and AI/ML model-free RL. Model-based RL is an RL algorithm that uses a predictive AI/ML model to obtain transition probabilities between states using various dynamic states of the environment and an AI/ML model in which these states lead to rewards. Model-free RL is a value- or policy-based RL algorithm that achieves maximum future reward, which is less computationally complex in multi-agent environments/states and does not require accurate representation of the environment. The RL algorithm may also be classified into value-based RL versus policy-based RL, policy-based RL versus non-policy RL, and the like.

AI/ML models

FIG. 9 shows an example of a feed-forward neural network (FFNN) AI/ML model. Referring to FIG. 9, the FFNN AI/ML model includes an input layer, a hidden layer, and an output layer.

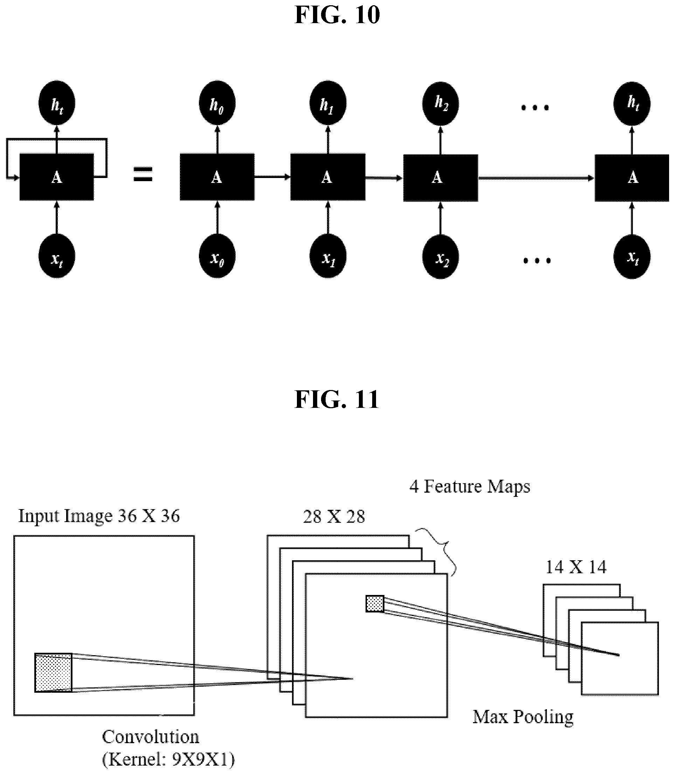

FIG. 10 shows an example of a recurrent neural network (RNN) AI/ML model. Referring to FIG. 10, the RNN AI/ML model is a type of artificial neural network in which a hidden node is connected to a directed edge to form a directed cycle and is an AI/ML model suitable for processing sequentially appearing data such as voice or text. One type of the RNN is a long short-term memory (LSTM), and the LSTM is a structure in which a cell-state is added to a hidden state of the RNN. In detail, in the LSTM, an input gate, a forget gate, and an output gate are added to the RNN cell, and a cell state is added. In Equation 10, A represents a neural network, xt denotes an input value, and ht denotes an output value. Here, ht may represent the current state value based on time, while $h_{t-1}$ may represent the previous state value.

FIG. 11 shows a convolution neural network (CNN) AI/ML model. The CNN is used for two purposes including reduction in AI/ML model complexity and extraction of good features by applying convolution computation commonly used in a video processing or image processing field. Referring to FIG. 11, a kernel or a filter means a unit/structure that applies a weight to an input in a specific range/unit. The kernel (or filter) may be modified through learning. A stride is a movement range in which the kernel is moved within the input. A feature map is the result of applying a kernel to an input. Padding refers to a value added to adjust the size of the feature map. To encourage robustness against distortion and changes, multiple feature maps may be extracted. Pooling refers to computation (e.g., max pooling or average pooling) to reduce the size of the feature map by downsampling the feature map.

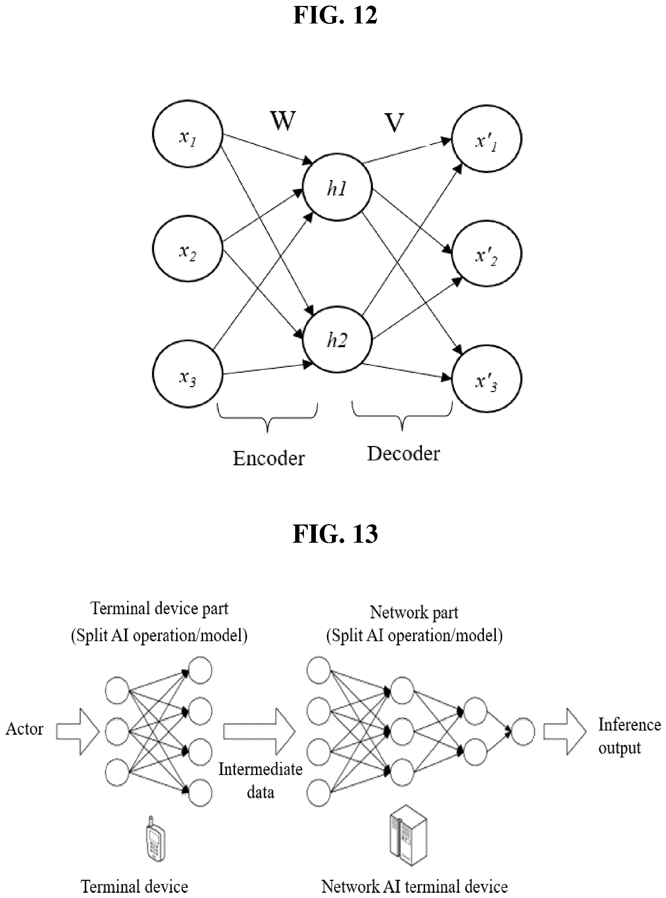

FIG. 12 shows an auto-encoder AI/ML model. Referring to FIG. 12, the auto-encoder is a neural network that receives a feature vector x and outputs the same or similar vector x' and a type of unsupervised learning with input and output nodes having the same feature. An autoencoder reconstructs the input, and thus, the output may be referred to as reconstruction. A loss function may be represented according to Equation 1 below.

[Equation 1]

$$\arg \min_{W,V} \left\| x - g(f(x)) \right\|^2, where\ \mathbf{h} = f(\mathbf{x}) = \mathbf{Wx}, \mathbf{x'} = g(\mathbf{h}) = \mathbf{Vh}$$

In Equation 12, the loss function of the autoencoder is calculated based on the difference between the input and output. Based on the loss function of the autoencoder, the degree of loss in the input is assessed, and an optimization process is applied to the autoencoder to minimize the loss.

FIG. 13 is a diagram illustrating split AI inference.

FIG. 13 illustrates a case where a model inference function is collaboratively performed between an end devices such as a UE and a network AI/ML endpoint during the split AI operation.

In addition to the model inference function, a model training function, actor, and data collection function may each be split into multiple parts based on the current task and environment. These functions may be executed through the collaboration of multiple entities.

For example, computation-intensive and energy-intensive parts may be performed at the network endpoint, while privacy-sensitive and latency-sensitive parts may be executed on the end device. In this case, the end device executes tasks/models up to a specific part/layer based on input data and then transmits intermediate data to the network endpoint. The network endpoint executes the remaining parts/layers and provides inference outputs to one or more devices performing the operations/tasks.

The following describes a functional framework for AI operations.

Herein, the following terms may be defined for more detailed explanation of AI (or AI/ML).

- Data collection: Data collected from network nodes, management entities, or UEs, which serves as the foundation for AI model training, data analysis, and inference.
- AI model: A data-driven algorithm where AI techniques are applied to generate a set of outputs, including predictive information and/or decision parameters, based on a set of inputs.

- AI/ML training: An online or offline process of training an AI model by learning features and patterns to best represent data and obtain an AI/ML model trained for inference.
- AI/ML inference: A process that uses a trained AI model to make predictions or derive decisions based on collected data and the AI model.

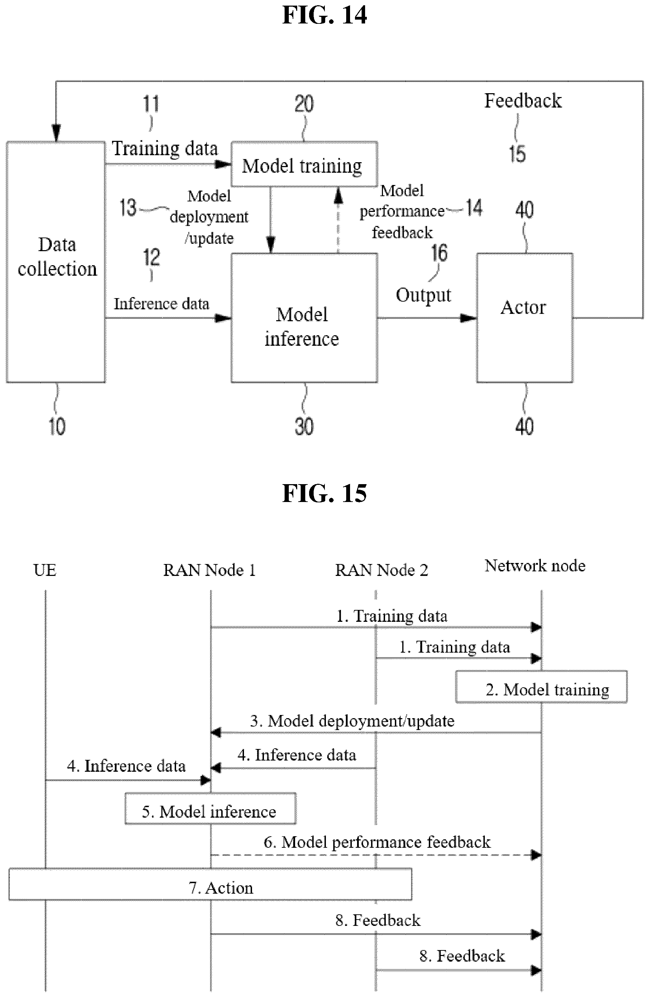

Referring to FIG. 14, a data collection function 10 collects input data and provides the processed input data to a model training function 20 and a model inference function 30.

For example, the input data may include measurements from UEs or other network entities, feedback from actors, and outputs from AI models.

The data collection function 10 performs data preparation based on the input data and provides the input data processed through the data preparation. Here, the data collection function 10 does not performs specific data preparation (e.g., data pre-processing and cleaning, forming, and transformation) for each AI algorithm, but the data collection function 10 may perform data preparation common to AI algorithms.

After completing the data preparation process, the data collection function 10 provides training data 11 to the model training function 20 and provides inference data 12 to the model inference function 30. Here, the training data 11 is input data required for the AI model training function 20. The inference data 12 is input data required for the AI model inference function 30.

The data collection function 10 may be performed by a single entity (e.g., UE, RAN node, network node, etc.) or by multiple entities. In this case, the training data 11 and inference data 12 may be provided to the model training function 20 and model inference function 30 respectively from multiple entities.

As part of the AI model testing procedure, the model training function 20 is responsible for performing AI model training, validation, and testing necessary to generate model performance metrics. If necessary, the model training function 20 may handle data preparation (e.g., data pre-processing and cleaning, forming, and transformation) based on the training data 11 provided by the data collection function 10.

Here, a model deployment/update 13 is used to initially deploy the trained, validated, and tested AI model to the model inference function 30 or to provide the updated model to the model inference function 30.

The model inference function 30 is responsible for providing an AI model inference output 16 (e.g., predictions or decisions). If applicable, the model inference function 30 may also provide model performance feedback 14 to the model training function 20. Additionally, the model inference function 30 may handle data preparation (e.g., data pre-processing and cleaning, forming, and transformation) based on the inference data 12 provided by the data collection function 10 if necessary.

Here, the output 16 refers to the inference output of the AI model generated by the model inference function 30, and the details of the inference output may vary depending on the use case.

The model performance feedback 14 may be used to monitor the performance of the AI model when available. However, the feedback may be omitted.

An actor function 40 receives the output 16 from the model inference function 30 and triggers or performs related tasks/operations. The actor function 40 may trigger tasks/operations for other entities (e.g., one or more UEs, one or more RAN nodes, one or more network nodes, etc.) or for itself.

Feedback 15 may be used to derive the training data 11 and inference data 12 or to monitor the performance of the AI model, the impact on the network, and so on.

The definitions of training, validation, and testing in a data set used in AI/ML may be distinguished as follows:

- Training data: The training data refers to a data set used for training a model.
- Validation data: The validation data refers to a data set used to validate a model that has already been trained. In other words, the validation data means a data set used to prevent overfitting of a typical training data set.

Additionally, the validation data refers to a data set used to select the best model among several trained models during the training process. Thus, the validation data may also be considered a type of learning.

- Test data: The test data refers to a data set used for final evaluation. The test data is independent of training.

In the case of the aforementioned data set, it is common to split a training set such that the training data and validation data are divided in a ratio of 8:2 or 7:3. When the test data is included, the training data, validation data, and test data may be divided in a ratio of 6:2:2 (training: validation: test).

Collaboration levels may be defined as follows, depending on the capability of the AI/ML functions between the BS and UE. It is also possible to combine multiple levels or to modify the levels by separating any one level.

Cat 0a) No Collaboration Framework: AI/ML algorithms are purely implementation-based and do not require changes to a wireless interface.

Cat 0b) This level involves a modified wireless interface suitable for efficient implementation-based AI/ML algorithms, but the level corresponds to a framework without collaboration.

Cat 1) Support between nodes is provided to enhance the AI/ML algorithm of each node. This level is applied when the UE receives support from the gNB (for training, adaptation, etc.), and vice versa. At this level, model exchange between network nodes is not required.

Cat 2) Collaborative ML tasks may be performed between the UE and gNB. This level requires the exchange of AI/ML model commands between network nodes.

The functions illustrated in FIG. 14 may be implemented in RAN nodes (e.g., BSs, TRPs, central units (CUs) of BSs), network nodes, operation administration maintenance (OAM) of network operators, or UEs.

Alternatively, two or more entities among the RAN nodes, network nodes, OAM of network operators, or UEs may collaborate to implement the functions illustrated in FIG. 14. For example, one entity may perform some of the functions in FIG. 14, while another entity may perform the remaining functions. In this way, if some of the functions illustrated in FIG. 14 are performed by a single entity (e.g., a UE, RAN node, or network node), the transfer/provision of data/information between individual functions may be omitted. For instance, if the model training function 20 and model inference function 30 are performed by the same entity, the transfer/provision of the model deployment/update 13 and model performance feedback 14 may be omitted.

Alternatively, any one of the functions illustrated in FIG. 14 may be performed through collaboration between two or more entities among the RAN nodes, network nodes, OAM of network operators, or UEs. This may be referred to as the split AI operation.

FIG. 15 illustrates a scenario where the AI model training function is performed by a network node (e.g., a core network node, OAM of a network operator, etc.), while the AI model inference function is performed by RAN nodes (e.g., BSs, TRPs, or CUs of BSs).

Step 1: RAN node 1 and RAN node 2 transmit input data for AI model training (i.e., training data) to the network node. Here, RAN node 1 and RAN node 2 may transmit data collected from a UE (e.g., UE measurements related to the RSRP, RSRQ, or SINR of serving and neighboring cells, UE location, speed, etc.) to the network node.

Step 2: The network node trains an AI model using the received training data.

Step 3: The network node deploys/updates the AI model to RAN node 1 and/or RAN node 2. RAN node 1 (and/or RAN node 2) may continue to perform model training based on the received AI model.

For the sake of convenience in explanation, it is assumed that the AI model is deployed/updated only to RAN node 1.

Step 4: RAN node 1 receives input data for AI model inference (i.e., inference data) from the UE and RAN node 2.

Step 5: RAN node 1 performs the AI model inference using the received inference data to generate output data (e.g., predictions or decisions).

Step 6: If applicable, RAN node 1 may transmit model performance feedback to the network node.

Step 7: RAN node 1, RAN node 2, and the UE (or RAN node 1 and UE, or RAN node 1 and RAN node 2) perform actions based on the output data. For example, in the case of a load balancing operation, the UE may move from RAN node 1 to RAN node 2.

Step 8: RAN node 1 and RAN node 2 transmit feedback information to the network node.

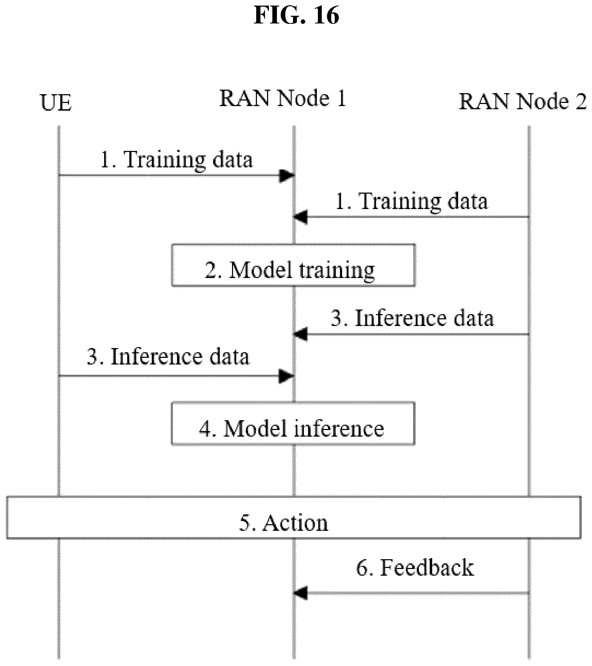

FIG. 16 illustrates a scenario where both the AI model training function and the AI model inference function are performed by RAN nodes (e.g., BSs, TRPs, or CUs of BSs).

Step 1: A UE and RAN node 2 transmit input data for AI model training (i.e., training data) to RAN node 1.

Step 2: RAN node 1 trains an AI model using the received training data.

Step 3: RAN node 1 receives input data for AI model inference (i.e., inference data) from the UE and RAN node 2.

Step 4: RAN node 1 performs the AI model inference using the received inference data to generate output data (e.g., predictions or decisions).

Step 5: RAN node 1, RAN node 2, and the UE (or RAN node 1 and UE, or RAN node 1 and RAN node 2) perform actions based on the output data. For example, in the case of a load balancing operation, the UE may move from RAN node 1 to RAN node 2.

Step 6: RAN node 2 transmits feedback information to RAN node 1.

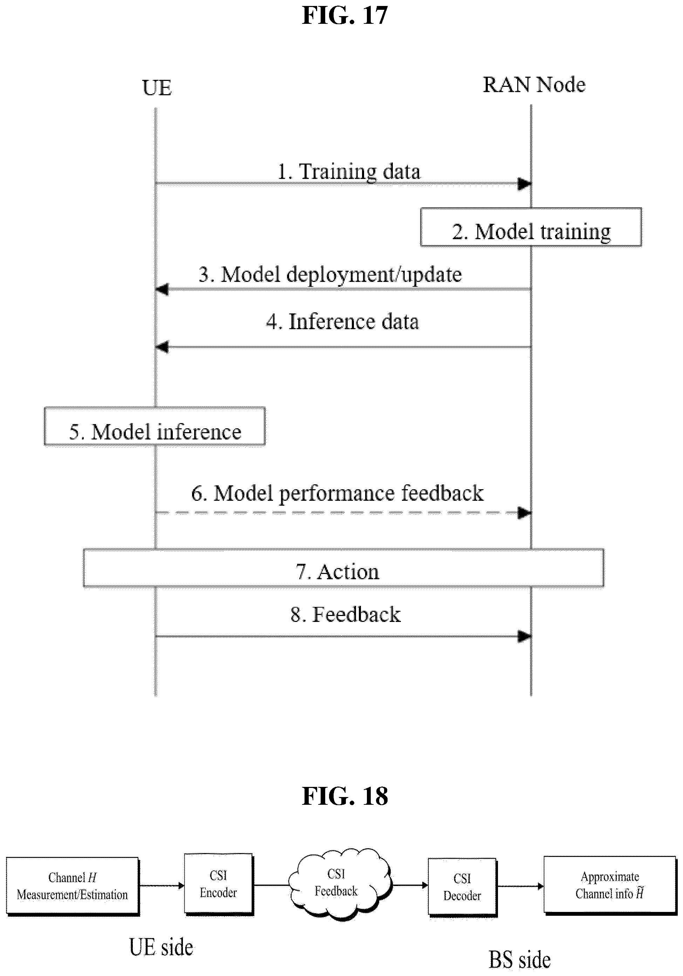

FIG. 17 illustrates a scenario where the AI model training function is performed by a RAN node (e.g., a BS, a TRP, or CUs of the BS), while the AI model inference function is performed by a UE.

Step 1: The UE transmits input data for AI model training (i.e., training data) to the RAN node. Here, the RAN node may collect data from various UEs and/or other RAN nodes (e.g., UE measurements related to the RSRP, RSRQ, or SINR of serving and neighboring cells, UE location, speed, etc.).

Step 2: The RAN node trains an AI model using the received training data.

Step 3: The RAN node deploys/updates the AI model to the UE. The UE may continue to perform model training based on the received AI model.

Step 4: The UE receives input data for AI model inference (i.e., inference data) from the RAN node (and/or from other UEs).

Step 5: The UE performs the AI model inference using the received inference data to generate output data (e.g., predictions or decisions).

Step 6: If applicable, the UE may transmit model performance feedback to the RAN node.

Step 7: The UE and RAN node perform actions based on the output data.

Step 8: The UE transmits feedback information to the RAN node.

### AI/ML Based CSI Reporting

With the advancement of computing technologies and AI/ML technologies, nodes and UEs included in a wireless communication network are becoming more intelligent and sophisticated. In particular, due to the intelligence of the network, it is expected that various network decision parameter values (e.g., transmission and reception power of each BS, transmission power of each UE, precoders/beams for each BS/UE, time/frequency resource allocation for each UE, duplex modes of each BS, etc.) may be quickly optimized and applied based on various network environmental parameters (e.g., distribution/location of BSs, distribution/location/material of buildings/furniture, location/movement direction/speed of UEs, climate information, etc.).

As described above, when a network or BS with the AI technology applied or a network/BS with advanced performance achieved through other means is implemented, it is expected that integrated control and/or real-time cooperation between BSs will enable dynamic optimization for interference and traffic. The present disclosure proposes CSI measurement/reporting methods to effectively perform cooperative communication when multiple networks/BSs perform the cooperative communication based on AI/ML within the context of an evolved network/BS.

FIG. 18 is a diagram for explaining a CSI reporting method based on an auto-encoder.

The current Rel-18 AI/ML study is discussing AI/ML-based CSI enhancement.

Referring to FIG. 18, it is assumed that both the UE and the BS have AI/ML capabilities. When the UE reports CSI generated based on AI/ML to the BS, the BS performs decoding using AI/ML to obtain the CSI of the UE. Here, it is assumed that the AI/ML capabilities include capabilities for training and/or inference. The AI/ML function for the BS may reside within the BS or be present in another location such as an AI/ML server. AI/ML-based CSI reporting may be used for CSI reporting in systems considering a single TRP/RRH (remote radio head).

To effectively control interference, cooperative transmission by multiple TRPs has been introduced in Rel-16/17. In the multi-TRP (MTRP) environment, non-coherent joint transmission (JT) is supported, which does not guarantee coherency for each TRP, and techniques for coherent transmission between TRPs are currently under discussion in Rel-18. The present disclosure proposes CSI reporting methods when AI/ML is introduced in such an MTRP environment.

**Proposal 1: In AI/ML-based CSI reporting for MTRP, some or all of the following factors may be considered as part of CSI contents.**

- CRI: CSI-RS resource indicator
- Layer indicator
- Channel quality indicator (CQI)
- Rank indicator
- Precoding matrix indicator (PMI): The PMI may be an AI/ML-based output PMI unlike the conventional PMI. The PMI may represent binary information indicating the directionality of a measured channel. For example, it may be similar to the direction of the eigenvector of the directionality of the corresponding channel.
- Quantization information refers to information on the number of bits (e.g., 4 bit) used for quantization in order to reduce the number of bits of a neural network.
- Model monitoring information (per TRP)
- Information on CSI Type

In Proposal 1, the CSI type may indicate whether the UE calculates CSI based on AI/ML or based on legacy codebooks (e.g., Type 1 CSI, Rel-15 Type II CSI, Rel-16 Type II CSI, Rel-17 Type II CSI, etc.). If the calculation is based on AI/ML, it is possible to provide information on which AI/ML model/algorithm is used or information on whether the calculated CSI is based on an MTRP or single-TRP (STRP). If the calculated CSI is based on the MTRP, it is also possible to provide information indicating whether the CSI is based on coherent joint transmission (CJT) or non-coherent joint transmission (NCJT).

The model monitoring information may be information for assessing the validity and quality of the AI/ML model from the perspective of life cycle management (LCM) for both the UE and the BS. The model monitoring information may use multiple bits to represent the quality of the AI/ML model or may indicate the presence of a model update/model transfer request with a 1-bit indicator. While the monitoring information may vary depending on the AI/ML model and algorithm, the monitoring information may be specified per TRP. In environments such as NCJT, the monitoring information may also be indicated per layer or per codeword (CW).

In Proposal 1, implicit CSI feedback, which is primarily considered in NR and LTE systems, may be configured. In implicit feedback, the UE does not directly report a channel matrix measured based on a CSI-RS but reports parameters (e.g., RI/CQI/PMI) that may represent the channel matrix to the BS to allow the BS to estimate the channel state of the UE.

On the other hand, explicit feedback refers to a method of reporting a channel matrix. For example, explicit feedback may involve quantizing the second statistics (channel covariance) of a channel matrix and reporting the results.

Therefore, explicit feedback has the advantage of higher accuracy in a channel measured by the UE but has the disadvantage of a larger payload compared to implicit feedback.

In the AI/ML-based CSI reporting, the feedback contents may vary depending on which feedback method is used. For example, if reporting based on explicit feedback is used, input data for an AI/ML model may include a raw channel matrix, channel covariance matrix, channel eigenvector, and/or eigenvalue. If the BS configures the reporting based on explicit feedback, some parameters of the feedback contents in Proposal 1 may be omitted. For instance, the RI may be omitted.

If Proposal 1 uses implicit feedback, when configuring AI/ML-based CSI (CSI calculation/CSI compression), the BS may configure information on the PMI size (or the size of channel-related information generated based on AI/ML), or the UE may include the information in Part 1 CSI (which will be described later). This is because, if an auto-encoder-like structure is used, the amount of CSI configured by the UE based on AI/ML in the AI/ML-based CSI reporting may vary, that is, the payload may change depending on the configuration of an AI/ML model. The PMI size (or the size of the channel-related information generated based on AI/ML) configured by the BS may be configured per layer, and thus, the final PMI size (or the size of the channel-related information generated based on AI/ML) may be determined as an integer multiple based on a reported RI value. For instance, if the BS sets 40 bits and the UE reports an RI of 2, the final PMI size (or the size of the channel-related information generated based on AI/ML) may be 40 * 2 = 80 bits. Alternatively, the PMI size may be configured across layers. In this case, the UE may generate a PMI (or channel-related information generated based on AI/ML) for multiple layers and report the PMI to the BS. The PMI (or channel-related information generated based on AI/ML) may be reported per TRP (e.g., for NC-JT) or configured commonly (e.g., for CJT).

If Proposal 1 supports an MTRP, the RI in Proposal 1 may be distinguished and reported as either a common RI or a per-TRP RI from the MTRP perspective. Additionally, it may also be reported whether the CQI is a common CQI (e.g., for coherent JT) or a per-TRP CQI (e.g., for non-coherent JT).

The CQI may be a value reported for the modulation and coding scheme (MCS) configuration of the BS. The CQI value may be reported based on the input/output values of an AI/ML model used in the CSI calculation of the UE, or the CQI value may not be reported. For example, if the input data value of the AI/ML model is a raw channel matrix, it may be considered as explicit channel feedback, thereby omitting the CQI report. Whether the CQI is reported may be based on the configuration of the BS, or the UE may additionally report whether the CQI is reported. For instance, for CSI encoding in NR, according to a two-level encoding method, Part 1 CSI includes a CRI/RI/CQI for 1st CW and/or information on the number of non-zero Type II CSI coefficients, while Part 2 CSI may include a CQI for 2nd CW/PMI/LI.

Regarding the presence or absence of specific CSI (content) reporting, an existing two-level encoding method or a three-level encoding method may be applied. The encoding methods described below may also be applied in STRP scenarios.

    1) 2-level encoding

    - Part 1 CSI: Information on CSI type, information on types of reported CSI contents (e.g., whether CQI/RI/PMI is reported), and RI.
    - Part 2 CSI: Reported CSI (CQI, PMI, LI, etc.), which is related to RI and CSI type information indicated in Part 1.

    2) 3-level encoding

    - Part 1 CSI: Information on CSI type and information on types of reported CSI contents.
    - Part 2 CSI: CRI/RI/CQI for 1st CW and/or number of non-zero Type II CSI coefficients
    - Part 3 CSI: CQI for 2nd CW/PMI/LI

As the MTRP method considered in Proposal 1, it is possible to consider AI/ML-based CSI calculations based on two methods: centralized learning and distributed learning. In the centralized learning method, a single TRP (or server) trains an AI/ML model and performs inference for each node. Here, the nodes may be other TRPs or UEs. On the other hand, the distributed learning method involves sharing training across multiple nodes that operate simultaneously to enhance training efficiency. Thus, the distributed learning method may have the advantages of communication efficiency, computational scalability, and data locality. Similarly, in federated learning, a collective model is constructed based on data distributed across various data owners. Instead of bringing data to a model, an AI/ML model is brought to data to allow local nodes or individual devices to collect data and train their own copies of the model. There is no need to report source data to a central node, the federated learning provides advantages in terms of data security and computational speed.

Assuming that MTRP CSI reporting is performed based on the aforementioned distributed learning or federated learning, AI/ML models used/applied by each node may differ. Therefore, the quality and/or requirements for CSI per TRP may vary depending on the training status/capability of the UE, which is an entity performing CSI measurement and reporting. To this end, the UE may additionally report information on the training status for each TRP and/or information on the quality of CSI calculated based on the AI/ML model to each TRP. For the CSI quality, the existing CQI may be used, or new factors may be introduced. Examples thereof may include values or evaluation metrics for assessing the AI/ML model, such as generalized cosine similarity, mean squared error, and spectral efficiency information. Based on the CSI quality information, a specific TRP may have a high level of CSI quality, while another TRP may have a low level of CSI quality. The BS may signal a threshold for determining high/low levels, or the levels may be predefined. In this case, if a TRP receives quality information with a low level, the TRP may determine that the AI/ML model of the UE and/or BS is outdated and requires an update. As a result, the TRP may indicate triggering signaling for updating or (re)training/inferencing of the AI/ML model of the UE. Alternatively, the BS may interpret reporting of the value as an implicit request for updating or (re)training/inferencing of the AI/ML model of the BS/UE. The BS may perform the updating or (re)training/inferencing itself or instruct the UE to perform the operations.

Alternatively, the UE may report information on a reference TRP, indicating which TRP the UE focuses on for training, and/or information on a loss function used for AI/ML model training to TRP(s). If the training status of the UE for a specific TRP falls below a specific threshold (either configured by the BS or predefined), the UE may drop the CSI report even if the UE is configured with MTRP CSI reporting. The UE may then report information on the drop to the BS. The information on the drop of the CSI report may also be provided through the CSI report. For example, the UE may omit reporting a CSI-RS associated with a specific TRP among multiple CSI-RS resources to indicate that the CSI is dropped. That is, the UE may not include the CSI-RS reporting in the CSI report. Alternatively, the UE may explicitly report CRI information (e.g., drop-CRI) related to the CSI drop with new CSI contents to the BS. Similar to the existing CRI, a channel measurement reference (CMR) or a CMR group/pair is selected for the drop-CRI. However, unlike the CRI, the CMR selected by the UE may be interpreted as a CMR that is dropped. Additionally, the UE may provide information on the expected time for the completion of training and/or model transfer/update to indicate that during the time, the TRP CSI will continue to be dropped or to prevent the BS from triggering reporting of the TRP CSI. The configuration of a UCI field during the CSI/CRI drop may follow the following examples.

Example 1) When the existing 2-level encoding is used, an indicator for MTRP or STRP CSI is included in Part 1.

- Part 1 CSI: Indicator for MTRP or STRP CSI, RI/CQI (for 1st codeword).
- Part 2 CSI: Remaining related CSI.

Example 2) UCI is configured based on an MTRP, but when the UE selects and reports STRP CSI, a specific codepoint (e.g., all zero, reserved) is indicated by a field corresponding to a specific TRP (e.g., second CRI/CQI/RI).

As another example, the AI/ML-based CSI reporting may be performed only for a strong TRP, while legacy codebook (CB) reporting may be used for the others. This is because the prediction performance of a CSI-RS for the strong TRP is relatively robust, and thus input data derived from the acquired channel has relatively a better quality. In this method, an indicator indicating the strong TRP may be reported, which may be included in a CSI part that determines the payload of the remaining CSI, similar to Part 1 CSI. When calculating CSI for the strong TRP based on AI/ML, the BS may indicate the strong TRP while triggering aperiodic/semi-persistent reporting. Alternatively, the BS may specify the strong TRP in a periodic CSI reporting configuration. Alternatively, the strong TRP may be established according to rules (the strong TRP may be determined as the first CMR (or lowest CSI-RS index) from a CMR pair/group corresponding to the MTRP, or the strong TRP may be determined as the first CMR (or lowest CSI-RS index) from multiple CMRs configured in the CSI report).

**Proposal 2: For AI/ML-based CSI reporting for an MTRP, each TRP/RRH may provide the UE with information on a set of TRPs that the UE needs to focus on for training,**

A TRP set may be defined as information configured for training of an AI/ML model. In particular, the TRP set may be information on TRPs that have high priorities (high weights) within a specific loss function. Proposal 2 may be used when a specific node among multiple nodes has an AI/ML capability or a high capability, while other nodes have no AI/ML capability or a low capability (reduced capability). For example, one TRP may have an AI/ML-based CSI decompression capability, while other TRPs may not have the capability. In this case, per-TRP CSI generated by the UE may differ. For instance, whether AI/ML-based CSI is generated (e.g., CSI compression) or whether specific information related to AI/ML-based CSI generation (e.g., CSI compression) is reported may vary for each TRP.

**Proposal 3: In AI/ML-based CSI reporting for an MTRP, the UE may also report information on a port (e.g., CSI-RS) corresponding to CSI reported for each TRP/RRH.**

In legacy NR, the UE configures CSI based on CSI-RS resources and codebook parameters configured by the BS and reports the CSI to the BS. In the MTRP environment, a CSI-RS configuration may involve a common CMR/IMR configured by a representative TRP/RRH. Ports may be mapped and configured according to pre-defined rules between each TRP/RRH, or each TRP/RRH may configure its own CMR/IMR. The UE may use a single virtual CMR aggregated from the multiple CMRs to measure CSI and generate the corresponding CSI. From the perspective of network energy saving, turning off unnecessary ports (e.g., ports corresponding to weak RSRP/SINR) may be beneficial for reducing power consumption. Accordingly, when the UE calculates CSI based on AI/ML, the UE may report information on ports related to CSI generation for each TRP to each TRP. That is, the parameters reported in the above proposal may include information on the total number of ports across TRPs and/or the number of ports per TRP. For example, in the case of CJT/NCJT, if the BS configures a total of 32 ports and assumes a maximum number of transmission ports per TRP to be 16, and if there are 2 TRPs participating in CJT/NCJT, the UE may generate CSI based on P ports (where $P \leq 32$ and $P = P1 + P2$) and report this information to the BS (where $P1$ and $P2$ are the number of ports corresponding to TRP/RRH 1 and TRP/RRH 2, respectively). Here, $P1$ and $P2$ may be determined to be 0 for CSI generation. In cases where the ports are reported as 0, it may be determined that each TRP is turned off. To report $P1$ and $P2$, a per-TRP bitmap or a common bitmap may be used and indicated. In the example, assuming that $P$, $P1$, and $P2$ are determined to 10, 4, and 6, respectively, if a per-TRP bitmap (16-bitmap) is used, the bitmap for TRP1 may be 1101100000000000, and the bitmap for TRP2 may be 1000111000110000, where the bits marked as 1 are recognized as turned-on ports. For a common bitmap (32-bitmap), it may represent an aggregation of per-TRP bitmaps as 11011000000000001000111000110000, and the port mapping order between each TRP may be configured or defined in advance.

For Proposal 3, the BS may additionally configure at least one of the following information.

- Total number of ports across TRP: In the example above, 32 ports.
- Max number of ports per TRP: In the example above, 16 ports.
- Min number of ports per TRP: The purpose of this parameter is to ensure the minimum participation of a specific TRP in CJT/NCJT. If the minimum value is set to 0, it may be understood that the TRP may also be turned off.
- Max allowed number of turn-off ports per TRP/across TRP: This parameter indicates the maximum number of ports that may be turned off for network power saving.

In Proposal 3, a port may be a port group depending on cases, and the port group may correspond to a TRP/RRH. Additionally, the port group may be associated with the size of a specific basis vector (e.g., DFT vector). For example, if the number of ports consisting of the port group is 8, it may mean the use of a length-8 DFT vector as the basis vector. In the example, if P1=4, a length-4 DFT vector may be used as a spatial domain (SD) basis for P1, while P2=6 may be used by determining a length-6 DFT vector as the SD basis.

When the port group is associated with a specific basis vector, or when the values for P/P1/P2 are simply reported, it may be included in examples of single-sided AI/ML at the UE. This may be included in examples where AI/ML uses the existing codebook structure (e.g., Rel-15/16/17 CSI) while optimizing the codebook parameters according to the channel state.

Table 6 shows a standardization agreement related to CSI compression (based on a single TRP).

[Table 6]

| |
| --- |
| In CSI compression using two-sided model use case, further study the following aspects for CSI configuration and report:<br>- Network configuration to determine CSI payload size, e.g., possible CSI payload size, possible rank restriction and/or other related configuration.<br>- How UE determines/reports the actual CSI payload size and/or other CSI related information within constraints configured by the network. |

As mentioned above, legacy (NR) CSI reporting uses two-part CSI encoding. The following is proposed to apply the two-part CSI encoding to AI/ML CSI compression.

**Proposal A: For AI/ML-based CSI reporting, the following CSI encoding is considered for some or all of the CSI contents listed below.**

1) Part 1 CSI:

- CRI
- RI
- CQI (for 1st CW)
- number of actual bits for AI/ML based CSI across layers

2) Part 2 CSI:

- LI
- CQI (for 2nd CW if RI>4)
- Quantization type and/or info (per layer)
- Frequency granularity (e.g., number of SB, size of frequency unit)
- number of actual bits for AI/ML based CSI per layer
- AI/ML generated CSI
- Confidence info for AI/ML generated CSI (per layer)

In Proposal A, the number of actual bits for AI/ML-based CSI across layers refers to the total feedback bits for CSI generated based on AI/ML. An AI/ML model may be applied differently per layer/layer group/rank, and as a result, different amounts of feedback may be reported to the BS for each layer. Therefore, to eliminate ambiguity regarding the bit length for each layer, information on the number of actual bits for AI/ML-based CSI per layer is included in Part 2 CSI. The confidence information indicates the accuracy or precision of the CSI generated based on AI/ML. For this information, a specific metric may be predefined or configured by the BS, and an intermediate key performance indicator (KPI) such as cosine similarity may be used for calculation. Alternatively, the confidence information may be information generated as an AI/ML model output.

As a modified example of Proposal A, the number of actual bits for AI/ML-based CSI across layers may be reported per layer in Part 1 CSI. In this case, information on the RI is not necessary. However, for rank 2 reporting, fields corresponding to layers 3 and 4 should be present in Part 1 CSI. Thus, in rank 2 transmission, there may be a drawback where the corresponding fields are wasted. On the other hand, as proposed above, the information on the number of actual bits for AI/ML-based CSI per layer is not required in Part 2 CSI.

Additionally, in Proposal A, the LI may be replaced by a layer strength indicator per layer and then transmitted. As a representative example of the layer strength indicator, relative eigenvalues/singular values may be used. For effective quantization of the values, the LI value is also transmitted, and relative eigenvalues/singular values (e.g., values <=1) may be transmitted based on a layer indicated by the LI, excluding the layer indicated by the LI. Alternatively, it may be mutually agreed that the strongest layer is always transmitted as the first layer, and only eigenvalues/singular values for the remaining (RI - 1) layers may be reported. In this case, the value of the first layer is always 1. If the layer strength indicator per layer is transmitted to the BS, the RI value may be omitted, and the layer indicator is included in Part 1 CSI. Examples thereof are provided below.

1) Part 1 CSI:

- CRI
- Layer strength indicator per layer
- CQI (for 1st CW)
- number of actual bits for AI/ML based CSI across layers

2) Part 2 CSI:

- CQI (for 2nd CW if RI>4)
- Quantization type and/or info (per layer)
- Frequency granularity (e.g., number of SB, size of frequency unit)
- number of actual bits for AI/ML based CSI per layer
- AI/ML generated CSI

- Confidence info for AI/ML generated CSI (per layer)

As another example of Proposal A, 3 part encoding may be considered as follows.

1) Part 1 CSI:

- CRI
- RI
- CQI (for 1st CW)

2) Part 2 CSI:

- number of actual bits for AI/ML based CSI per layer
- Confidence info for AI/ML generated CSI (per layer)

3) Part 3 CSI:

- LI
- CQI (for 2nd CW if RI>4)
- Quantization and/or info (per layer)
- Frequency granularity (e.g., number of SB, size of frequency unit)
- number of actual bits for AI/ML based CSI per layer
- AI/ML generated CSI

In the above embodiment, Part 1 affects the payload of Part 2, and all or some contents of Part 2 CSI are designed to impact Part 3 CSI. Therefore, the CQI (for 1st CW and/or 2nd CW), confidence information for AI/ML generated CSI (per layer), LI, quantization information, and/or frequency granularity may be included in Part 2 CSI or Part 3 CSI.

In Proposal A, the rank and CQI information in AI/ML-based CSI reporting may be calculated and reported differently from the legacy method. Therefore, in AI/ML CSI reporting, the above information may be omitted, and instead, all or some of the following CSI contents may be reported.

1) Part 1 CSI:

- number of actual bits for AI/ML based CSI per layer
- Layer strength indicator per layer

2) Part 2 CSI:

- AI/ML generated CSI
- Confidence info for AI/ML generated CSI (per layer)

The layer strength indicator per layer and confidence information for AI/ML generated CSI (per layer) may be included and reported in Part 1 CSI or Part 2 CSI.

As another example of the above embodiment, the following may be considered to give a higher priority to the strongest layer.

1) Part 1 CSI:

- number of actual bits for AI/ML based CSI per layer (w/o strongest layer)
- AI/ML generated CSI for strongest layer

2) Part 2 CSI:

- Rest of AI/ML generated CSI
- Confidence info for AI/ML generated CSI (per layer)

The bit width for the strongest layer, which is reported as Part 1 CSI, may be predetermined or configured/indicated by the BS to the UE.

The aforementioned embodiments may also be combined.

Proposal 1, Proposal 2, Proposal 3, and Proposal A may be applied/implemented individually by combining any two proposals. Additionally, all or some of the proposals related to the MTRP may be set as an STRP (M=1) such that the proposals are applicable to STRP scenarios.

As described above, when a network or BS with the AI technology applied or a network/BS with advanced performance (achieved through other means) is implemented, it is expected that integrated control and/or real-time cooperation between BSs will enable dynamic optimization for interference and traffic. The present disclosure proposes resource control and CSI-related signaling methods suitable for the above purpose.

In the above embodiments, each TRP/RRH may be explicitly distinguished by a TRP ID or may be identified through the following index.

Each TRP may be distinguished by a CSI-RS resource ID (and/or sequence ID), a cell ID, CORESETPoolIndex, or a (SSB) beam index (or TCI states index) in CSI-ResourceConfig. For each TRP, an AI/ML model (pair) ID and/or functionality ID may also be distinguished. The IDs can be configured, indicated, or differentiated in relation to the CSI-RS resource ID (and/or sequence ID), cell ID, CORESETPoolIndex, or (SSB) beam index (or TCI states index).

In particular, for MTRP CSI feedback, one or more AI/ML model (pair) IDs and/or one or more functionality IDs are configured within a specific set (e.g., CSI-RS resource set or AI/ML function set). The BS may order the AI/ML model IDs and/or functionality IDs per TRP based on a specific index and configure the application order of the corresponding models/functions. Alternatively, implicit ordering may be performed based on the aforementioned CSI-RS ID, cell ID, CORESETPoolIndex, or TCI state index.

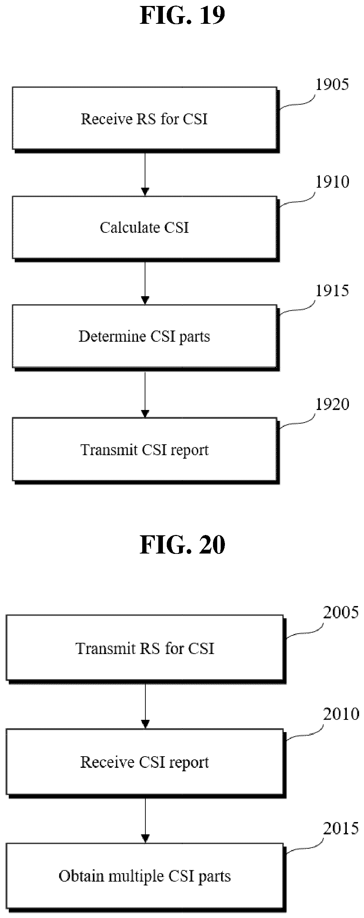

FIG. 19 illustrates a flow of a method by which a UE transmits CSI according to an embodiment.

Referring to FIG. 19, the UE may receive an RS for CSI from a BS (1905).

The UE may calculate the CSI based on the received RS (1910).

The UE may determine a plurality of CSI parts including a first CSI part and a second CSI part, based on the CSI (1915).

The UE may transmit a CSI report based on the plurality of CSI parts (1920).

The calculated CSI may include AI/ML model-based CSI. The first CSI part may include information on the total number of bits of the AI/ML model-based CSI across all layers. The second CSI part may include information on the number of bits for each layer of the AI/ML model-based CSI.

The second CSI part may further include information on the accuracy of the AI/ML model-based CSI. The accuracy information may be provided for each layer.

At least one of information on a spatial/frequency domain unit related to the AI/ML model-based CSI, information on granularity related to the AI/ML model-based CSI, or information on quantization related to the AI/ML model-based CSI may be further included.

The AI/ML model-based CSI may be related to multiple TRPs. The AI/ML model-based CSI may include information on a CSI-RS port for each of the related TRPs. The AI/ML model-based CSI may be provided commonly for the multiple TRPs or individually for each TRP.

An AI/ML model may be configured individually for each layer.

The second CSI part may include first AI/ML model-based CSI for a first layer and second AI/ML model-based CSI for a second layer. The number of bits of the first AI/ML model-based CSI and the number of bits of the second AI/ML model-based CSI may be different from each other.

The plurality of CSI parts may include a third CSI part, and the third CSI part may include AI/ML model-based CSI for each layer.

FIG. 20 illustrates a flow of a method by which a BS receives CSI according to one embodiment.

Referring to FIG. 20, the BS may transmit an RS for CSI (2005).

The BS may receive a CSI report for the RS from a UE (2010).

The BS may obtain a plurality of CSI parts, including a first CSI part and a second CSI part, from the CSI report (2015).

The CSI report may include AI/ML model-based CSI. The first CSI part may include information on the total number of bits of the AI/ML model-based CSI across all layers. The second CSI part may include information on the number of bits for each layer of the AI/ML model-based CSI.

The second CSI part may further include information on the accuracy of the AI/ML model-based CSI. The accuracy information may be provided for each layer.

It may further include quantization information related to the AI/ML model-based CSI.

The AI/ML model-based CSI may be related to multiple TRPs. The AI/ML model-based CSI may be provided commonly for the multiple TRPs or individually for each TRP.

An AI/ML model may be configured individually for each layer.

The second CSI part may include first AI/ML model-based CSI for a first layer and second AI/ML model-based CSI for a second layer. The number of bits of the first AI/ML model-based CSI and the number of bits of the second AI/ML model-based CSI may be different from each other.

The plurality of CSI parts may include a third CSI part, and the third CSI part may include AI/ML model-based CSI for each layer. The multiple CSI parts may include a third CSI part, which may contain AI/ML model-based CSI for each layer.

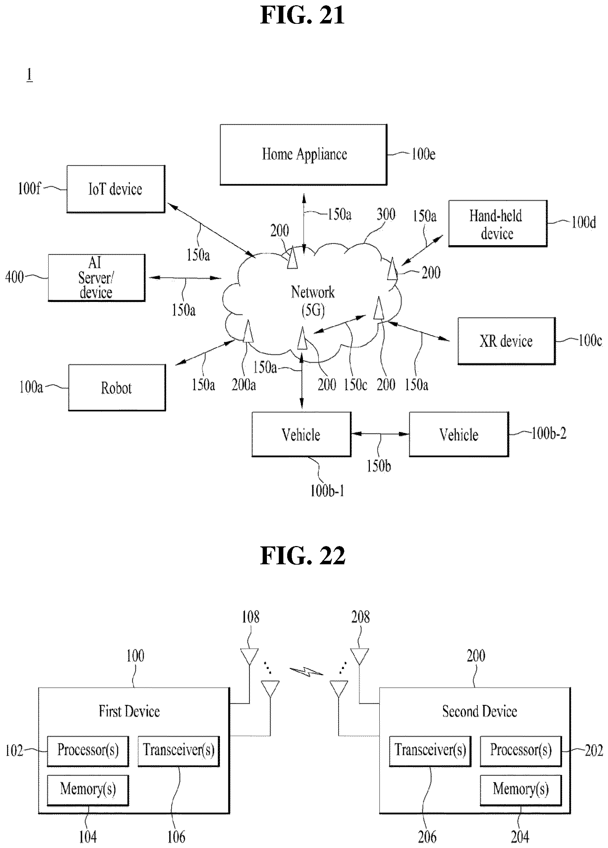

FIG. 21 illustrates a communication system 1 applied to the disclosure.

Referring to FIG. 21, a communication system 1 applied to the disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the disclosure.

FIG. 22 illustrates wireless devices applicable to the disclosure.

Referring to FIG. 22, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 21.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

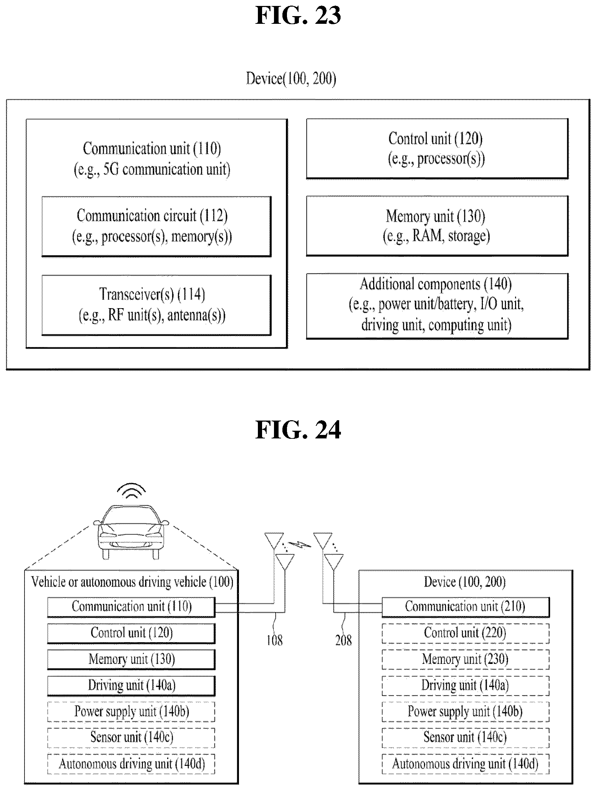

FIG. 23 illustrates another example of a wireless device applied to the disclosure. The wireless device may be implemented in various forms according to a use-case/service (refer to FIG. 21).

Referring to FIG. 23, wireless devices 100 and 200 may correspond to the wireless devices 100 and 200 of FIG. 22 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 22. For example, the transceiver(s) 114 may include the one or more transceivers 106 and 206 and/or the one or more antennas 108 and 208 of FIG. 22. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 21), the vehicles (100b-1 and 100b-2 of FIG. 21), the XR device (100c of FIG. 21), the hand-held device (100d of FIG. 21), the home appliance (100e of FIG. 21), the IoT device (100f of FIG. 21), a digital broadcast terminal, a hologram device, a public safety device, an MTC device, a medicine device, a fintech device (or a finance device), a security device, a climate/environment device, the AI server/device (400 of FIG. 21), the BSs (200 of FIG. 21), a network node, etc. The wireless device may be used in a mobile or fixed place according to a use-example/service.

In FIG. 23, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 24 illustrates a vehicle or an autonomous driving vehicle applied to the disclosure. The vehicle or autonomous driving vehicle may be implemented by a mobile robot, a car, a train, a manned/unmanned Aerial Vehicle (AV), a ship, etc.

Referring to FIG. 24, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 23, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

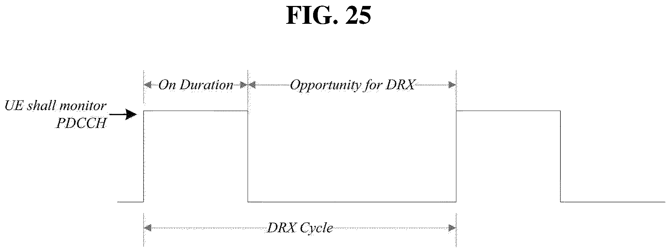

FIG. 25 is a diagram illustrating a DRX operation of a UE according to an embodiment of the disclosure.

The UE may perform a DRX operation in the afore-described/proposed procedures and/or methods. A UE configured with DRX may reduce power consumption by receiving a DL signal discontinuously. DRX may be performed in an RRC_IDLE state, an RRC_INACTIVE state, and an RRC_CONNECTED state. The UE performs DRX to receive a paging signal discontinuously in the RRC_IDLE state and the RRC_INACTIVE state. DRX in the RRC_CONNECTED state (RRC_CONNECTED DRX) will be described below.

Referring to FIG. 25, a DRX cycle includes an On Duration and an Opportunity for DRX. The DRX cycle defines a time interval between periodic repetitions of the On Duration. The On Duration is a time period during which the UE monitors a PDCCH. When the UE is configured with DRX, the UE performs PDCCH monitoring during the On Duration. When the UE successfully detects a PDCCH during the PDCCH monitoring, the UE starts an inactivity timer and is kept awake. On the contrary, when the UE fails in detecting any PDCCH during the PDCCH monitoring, the UE transitions to a sleep state after the On Duration. Accordingly, when DRX is configured, PDCCH monitoring/reception may be performed discontinuously in the time domain in the afore-described/proposed procedures and/or methods. For example, when DRX is configured, PDCCH reception occasions (e.g., slots with PDCCH SSs) may be configured discontinuously according to a DRX configuration in the disclosure. On the contrary, when DRX is not configured, PDCCH monitoring/reception may be performed continuously in the time domain. For example, when DRX is not configured, PDCCH reception occasions (e.g., slots with PDCCH SSs) may be configured continuously in the disclosure. Irrespective of whether DRX is configured, PDCCH monitoring may be restricted during a time period configured as a measurement gap.

Table 7 describes a DRX operation of a UE (in the RRC_CONNECTED state). Referring to Table 7, DRX configuration information is received by higher-layer signaling (e.g., RRC signaling), and DRX ON/OFF is controlled by a DRX command from the MAC layer. Once DRX is configured, the UE may perform PDCCH monitoring discontinuously in performing the afore-described/proposed procedures and/or methods.

[Table 7]

|  | Type of signals | UE procedure |
|---|---|---|
| 1st step | RRC signalling (MAC-Cell GroupConfig) | - Receive DRX configuration information |
| 2nd Step | MAC CE ((Long) DRX command MAC CE) | - Receive DRX command |
| 3rd Step | - | - Monitor a PDCCH during an on-duration of a DRX cycle |

MAC-CellGroupConfig includes configuration information required to configure MAC parameters for a cell group. MAC-CellGroupConfig may also include DRX configuration information. For example, MAC-CellGroupConfig may include the following information in defining DRX.

- Value of drx-OnDurationTimer: defines the duration of the starting period of the DRX cycle.

- Value of drx-InactivityTimer: defines the duration of a time period during which the UE is awake after a PDCCH occasion in which a PDCCH indicating initial UL or DL data has been detected.
- Value of drx-HARQ-RTT-TimerDL: defines the duration of a maximum time period until a DL retransmission is received after reception of a DL initial transmission.
- Value of drx-HARQ-RTT-TimerDL: defines the duration of a maximum time period until a grant for a UL retransmission is received after reception of a grant for a UL initial transmission.
- drx-LongCycleStartOffset: defines the duration and starting time of a DRX cycle.
- drx-ShortCycle (optional): defines the duration of a short DRX cycle.

When any of drx-OnDurationTimer, drx-InactivityTimer, drx-HARQ-RTT-TimerDL, and drx-HARQ-RTT-TimerDL is running, the UE performs PDCCH monitoring in each PDCCH occasion, staying in the awake state.

The above-described embodiments correspond to combinations of elements and features of the disclosure in prescribed forms. And, the respective elements or features may be considered as selective unless they are explicitly mentioned. Each of the elements or features may be implemented in a form failing to be combined with other elements or features. Moreover, it is able to implement an embodiment of the disclosure by combining elements and/or features together in part. A sequence of operations explained for each embodiment of the disclosure may be modified. Some configurations or features of one embodiment may be included in another embodiment or may be substituted for corresponding configurations or features of another embodiment. And, it is apparently understandable that an embodiment is configured by combining claims failing to have relation of explicit citation in the appended claims together or may be included as new claims by amendment after filing an application.

Those skilled in the art will appreciate that the disclosure may be carried out in other specific ways than those set forth herein without departing from the spirit and essential characteristics of the disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

INDUSTRIAL APPLICABILITY

The disclosure is applicable to UEs, BSs, or other apparatuses in a wireless mobile communication system.

**Claims**

1.  A method of transmitting channel state information (CSI) by a user equipment (UE) in a wireless communication system, the method comprising:

    receiving a reference signal for CSI from a base station (BS);
    calculating the CSI based on the reference signal;
    determining a plurality of CSI parts including a first CSI part and a second CSI part, based on the CSI; and
    transmitting a CSI report based on the plurality of CSI parts,
    wherein the calculated CSI comprises artificial intelligence/machine learning (AI/ML) model-based CSI,
    wherein the first CSI part comprises information regarding a total number of bits of the AI/ML model-based CSI across all layers, and
    wherein the second CSI part comprises information regarding a number of bits for each layer of the AI/ML model-based CSI.

2.  The method of claim 1, wherein the second CSI part further comprises information regarding accuracy of the AI/ML model-based CSI.

3.  The method of claim 2, wherein the information regarding the accuracy is provided for each layer.

4.  The method of claim 1, wherein further comprises at least one of information regarding a spatial/frequency domain unit related to the AI/ML model-based CSI, information regarding granularity related to the AI/ML model-based CSI, or information regarding quantization related to the AI/ML model-based CSI.

5.  The method of claim 1, wherein the AI/ML model-based CSI is related to multiple transmission reception points (TRPs).

6. The method of claim 5, wherein the AI/ML model-based CSI comprises information regarding a channel state information reference signal (CSI-RS) port for each of the related TRPs.

7. The method of claim 5, wherein the AI/ML model-based CSI is provided commonly for the multiple TRPs or individually for each TRP.

8. The method of claim 1, wherein an AI/ML model is configured individually for each layer.

9. The method of claim 1, wherein the second CSI part comprises first AI/ML model-based CSI for a first layer and second AI/ML model-based CSI for a second layer.

10. The method of claim 9, wherein a number of bits of the first AI/ML model-based CSI and a number of bits of the second AI/ML model-based CSI are different from each other.

11. The method of claim 1, wherein the plurality of CSI parts comprises a third CSI part, and
wherein the third CSI part comprises AI/ML model-based CSI for each layer.

12. A computer-readable recording medium having recorded thereon a program for executing the method of Claim 1.

13. A device for wireless communication, the device comprising:

a memory configured to store instructions; and
a processor configured to perform operations by executing the instructions,
wherein the operations of the processor comprise:

receiving a reference signal for channel state information (CSI) from a base station (BS);
calculating the CSI based on the reference signal;
determining a plurality of CSI parts including a first CSI part and a second CSI part, based on the CSI; and
transmitting a CSI report based on the plurality of CSI parts,
wherein the calculated CSI comprises artificial intelligence/machine learning (AI/ML) model-based CSI,
wherein the first CSI part comprises information regarding a total number of bits of the AI/ML model-based CSI across all layers, and
wherein the second CSI part comprises information regarding a number of bits for each layer of the AI/ML model-based CSI.

14. A method of receiving channel state information (CSI) by a base station (BS), the method comprising:

transmitting a reference signal for CSI;
receiving a CSI report for the reference signal from a user equipment (UE); and
obtaining a plurality of CSI parts including a first CSI part and a second CSI part, from the CSI report,
wherein the CSI report comprises artificial intelligence/machine learning (AI/ML) model-based CSI,
wherein the first CSI part comprises information regarding a total number of bits of the AI/ML model-based CSI across all layers, and
wherein the second CSI part comprises information regarding a number of bits for each layer of the AI/ML model-based CSI.

15. A base station (BS) for wireless communication, the BS comprising:

a transceiver; and
a processor configured to transmit a reference signal for channel state information (CSI), to receive a CSI report for the reference signal from a user equipment (UE) and to obtain a plurality of CSI parts including a first CSI part and a second CSI part from the CSI report, by controlling the transceiver,
wherein the CSI report comprises artificial intelligence/machine learning (AI/ML) model-based CSI,
wherein the first CSI part comprises information regarding a total number of bits of the AI/ML model-based CSI across all layers, and
wherein the second CSI part comprises information regarding a number of bits for each layer of the AI/ML model-based CSI.

# FIG. 1

Initial Cell Search — System Information Reception — Random Access Procedure — General DL/UL Tx/Rx S18

| PSS/SSS & [DLRS] & PBCH | PDCCH/ PDSCH (BCCH) | PRACH | PDCCH/ PDSCH | PRACH | PDCCH/ PDSCH | PDCCH/ PDSCH | PUSCH/ PUCCH |

S11  S12  S13  S14  S15  S16  S17

• DL/UL ACK/NACK
• UE CQI/PMI/Rank Report using PUSCH and PUCCH

# FIG. 2

One Frame (10ms)

Half-Frame (5ms) — Half-Frame (5ms)

Subframe 0 (1ms) ... Subframe 4 (1ms) — Subframe 5 (1ms) ... Subframe 9 (1ms)

Subframe (1ms)

15KHz — Slot (14 symbols) — 1ms

30KHz — Slot 0 (14 symbols) — Slot 1 — 500us

60KHz — Slot 0 (14 symbols) — Slot 1 — Slot 2 — Slot 3 — 250us

120KHz — Slot 0 (14 symbols) — Slot 1 — Slot 2 — Slot 3 — Slot 4 — Slot 5 — Slot 6 — Slot 7 — 125us

# FIG. 3

Resource grid

A carrier
(up to 3300 subcarriers, i. e., 275 RBs)

A BWP

1 RB = 12 subcarriers

1 RE

1 subcarrier

1 symbol

# FIG. 4

Long PUCCH

PDCCH

Gap

PDSCH/PUSCH

Short PUCCH

Long PUCCH

One slot

f

t

# FIG. 5

DL assingment-to-PDSCH offset (K0)

PDCCH

PDSCH

PUCCH

slot

PDSCH-to-HARQ-ACK reporting offset (K1)

# FIG. 6

UL grant-to-PUSCH offset (K2)

PDCCH

PUSCH

# FIG. 7

UE

BS

Configuration Information related to CSI (710)

RS(e.g., CSI-RS) (720)

Calculate CSI (730)

Report CSI (740)

# FIG. 8

# FIG. 9

| | |
|---|---|
| ◔ | Input Layer |
| ● | Hidden Layer |
| ▨ | Output Layer |

# FIG. 10

# FIG. 11

4 Feature Maps

Input Image 36 X 36          28 X 28

14 X 14

Convolution
(Kernel: 9X9X1)

Max Pooling

# FIG. 12

Encoder          Decoder

# FIG. 13

Terminal device part
(Split AI operation/model)

Network part
(Split AI operation/model)

Actor

Intermediate
data

Inference
output

Terminal device          Network AI terminal device

# FIG. 14

# FIG. 15

# FIG. 16

UE       RAN Node 1       RAN Node 2

1. Training data

1. Training data

2. Model training

3. Inference data

3. Inference data

4. Model inference

5. Action

6. Feedback

# FIG. 17

UE                                              RAN Node

1. Training data

2. Model training

3. Model deployment/update

4. Inference data

5. Model inference

6. Model performance feedback

7. Action

8. Feedback

# FIG. 18

Channel *H* Measurement/Estimation → CSI Encoder → CSI Feedback → CSI Decoder → Approximate Channel info $\tilde{H}$

UE side                                    BS side

## FIG. 19

Receive RS for CSI — 1905

Calculate CSI — 1910

Determine CSI parts — 1915

Transmit CSI report — 1920

## FIG. 20

Transmit RS for CSI — 2005

Receive CSI report — 2010

Obtain multiple CSI parts — 2015

# FIG. 21

1

# FIG. 22

# FIG. 23

Device(100, 200)

Communication unit (110)
(e.g., 5G communication unit)

Communication circuit (112)
(e.g., processor(s), memory(s))

Transceiver(s) (114)
(e.g., RF unit(s), antenna(s))

Control unit (120)
(e.g., processor(s))

Memory unit (130)
(e.g., RAM, storage)

Additional components (140)
(e.g., power unit/battery, I/O unit,
driving unit, computing unit)

# FIG. 24

Vehicle or autonomous driving vehicle (100)

Communication unit (110)

Control unit (120)

Memory unit (130)

Driving unit (140a)

Power supply unit (140b)

Sensor unit (140c)

Autonomous driving unit (140d)

108    208

Device (100, 200)

Communication unit (210)

Control unit (220)

Memory unit (230)

Driving unit (140a)

Power supply unit (140b)

Sensor unit (140c)

Autonomous driving unit (140d)

# FIG. 25

UE shall monitor
PDCCH

On Duration · Opportunity for DRX

DRX Cycle

| INTERNATIONAL SEARCH REPORT | International application No. |
|---|---|
| | **PCT/KR2023/009112** |

**A.    CLASSIFICATION OF SUBJECT MATTER**

**H04B 7/06**(2006.01)i; **H04B 7/024**(2017.01)i; **H04L 5/00**(2006.01)i; **G06N 20/00**(2019.01)i

According to International Patent Classification (IPC) or to both national classification and IPC

**B.    FIELDS SEARCHED**

Minimum documentation searched (classification system followed by classification symbols)

H04B 7/06(2006.01); G06N 20/00(2019.01); H04L 5/00(2006.01); H04W 16/32(2009.01); H04W 24/10(2009.01); H04W 72/10(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: CSI(channel state information), 참조 신호(reference signal), AI/ML 모델(artificial intelligence/machine learning model), 파트(part)

**C.    DOCUMENTS CONSIDERED TO BE RELEVANT**

| Category* | Citation of document, with indication, where appropriate, of the relevant passages | Relevant to claim No. |
|---|---|---|
| Y | US 2021-0351885 A1 (SAMSUNG ELECTRONICS CO., LTD.) 11 November 2021 (2021-11-11) See paragraphs [0091]-[0092], [0094], [0120] and [0180]; and claims 1 and 4. | 1-15 |
| Y | US 2021-0273707 A1 (QUALCOMM INCORPORATED) 02 September 2021 (2021-09-02) See paragraph [0069]; and claim 8. | 1-15 |
| A | EP 2677802 A1 (NTT DOCOMO, INC.) 25 December 2013 (2013-12-25) See paragraphs [0041]-[0055]; claim 1; and figure 4. | 1-15 |
| A | US 2012-0327785 A1 (ZHANG, Xingwei et al.) 27 December 2012 (2012-12-27) See paragraphs [0112]-[0122]; claim 1; and figure 12. | 1-15 |
| A | US 11349529 B2 (LG ELECTRONICS INC.) 31 May 2022 (2022-05-31) See column 72, line 30 - column 73, line 35; claim 1; and figure 24. | 1-15 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **04 October 2023** | **05 October 2023** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

| Patent document cited in search report | | | Publication date (day/month/year) | Patent family member(s) | | | Publication date (day/month/year) |
|---|---|---|---|---|---|---|---|
| US | 2021-0351885 | A1 | 11 November 2021 | WO | 2020-213964 | A1 | 22 October 2020 |
| US | 2021-0273707 | A1 | 02 September 2021 | CN | 115136505 | A | 30 September 2022 |
| | | | | EP | 4111599 | A1 | 04 January 2023 |
| | | | | WO | 2021-173331 | A1 | 02 September 2021 |
| EP | 2677802 | A1 | 25 December 2013 | EP | 2677802 | A4 | 24 August 2016 |
| | | | | JP | 2012-175272 | A | 10 September 2012 |
| | | | | JP | 5462203 | B2 | 02 April 2014 |
| | | | | US | 2014-0023009 | A1 | 23 January 2014 |
| | | | | US | 9232428 | B2 | 05 January 2016 |
| | | | | WO | 2012-111625 | A1 | 23 August 2012 |
| US | 2012-0327785 | A1 | 27 December 2012 | CN | 102013954 | A | 13 April 2011 |
| | | | | CN | 102013954 | B | 07 December 2011 |
| | | | | CN | 102332962 | A | 25 January 2012 |
| | | | | CN | 102332962 | B | 18 December 2013 |
| | | | | CN | 102668404 | A | 12 September 2012 |
| | | | | CN | 102668404 | B | 19 November 2014 |
| | | | | EP | 2528245 | A1 | 28 November 2012 |
| | | | | EP | 2528245 | A4 | 03 April 2013 |
| | | | | EP | 2528245 | B1 | 08 June 2016 |
| | | | | US | 2012-0314613 | A1 | 13 December 2012 |
| | | | | US | 8824329 | B2 | 02 September 2014 |
| | | | | US | 9209882 | B2 | 08 December 2015 |
| | | | | WO | 2011-140876 | A1 | 17 November 2011 |
| US | 11349529 | B2 | 31 May 2022 | CN | 107431522 | A | 01 December 2017 |
| | | | | CN | 107431522 | B | 16 March 2021 |
| | | | | CN | 107466446 | A | 12 December 2017 |
| | | | | CN | 107466446 | B | 12 February 2021 |
| | | | | CN | 107534540 | A | 02 January 2018 |
| | | | | CN | 107534540 | B | 23 October 2020 |
| | | | | CN | 107925451 | A | 17 April 2018 |
| | | | | CN | 107925451 | B | 15 October 2021 |
| | | | | CN | 107925466 | A | 17 April 2018 |
| | | | | CN | 108028684 | A | 11 May 2018 |
| | | | | CN | 108028684 | B | 15 October 2021 |
| | | | | CN | 112865847 | A | 28 May 2021 |
| | | | | EP | 3327943 | A1 | 30 May 2018 |
| | | | | EP | 3327943 | A4 | 27 March 2019 |
| | | | | EP | 3327944 | A1 | 30 May 2018 |
| | | | | EP | 3327944 | A4 | 20 March 2019 |
| | | | | EP | 3327945 | A1 | 30 May 2018 |
| | | | | EP | 3327945 | A4 | 27 March 2019 |
| | | | | EP | 3327945 | B1 | 31 March 2021 |
| | | | | EP | 3327950 | A1 | 30 May 2018 |
| | | | | EP | 3327950 | A4 | 27 March 2019 |
| | | | | JP | 2018-527798 | A | 20 September 2018 |
| | | | | JP | 2018-528654 | A | 27 September 2018 |
| | | | | JP | 6763942 | B2 | 30 September 2020 |
| | | | | JP | 6813566 | B2 | 13 January 2021 |
| | | | | KR | 10-2018-0024014 | A | 07 March 2018 |
| | | | | KR | 10-2018-0025915 | A | 09 March 2018 |

Form PCT/ISA/210 (patent family annex) (July 2022)

INTERNATIONAL SEARCH REPORT
Information on patent family members

International application No.

**PCT/KR2023/009112**

| Patent document cited in search report | Publication date (day/month/year) | Patent family member(s) | | Publication date (day/month/year) |
|---|---|---|---|---|
| | | KR 10-2018-0025941 | A | 09 March 2018 |
| | | KR 10-2018848 | B1 | 05 September 2019 |
| | | KR 10-2019-0104452 | A | 09 September 2019 |
| | | KR 10-2062902 | B1 | 11 February 2020 |
| | | KR 10-2076847 | B1 | 12 February 2020 |
| | | KR 10-2202038 | B1 | 12 January 2021 |
| | | US 10236951 | B2 | 19 March 2019 |
| | | US 10270504 | B2 | 23 April 2019 |
| | | US 10361757 | B2 | 23 July 2019 |
| | | US 10439691 | B2 | 08 October 2019 |
| | | US 10476575 | B2 | 12 November 2019 |
| | | US 10536199 | B2 | 14 January 2020 |
| | | US 10608708 | B2 | 31 March 2020 |
| | | US 10819412 | B2 | 27 October 2020 |
| | | US 10897290 | B2 | 19 January 2021 |
| | | US 10938455 | B2 | 02 March 2021 |
| | | US 10985808 | B2 | 20 April 2021 |
| | | US 11018737 | B2 | 25 May 2021 |
| | | US 11296758 | B2 | 05 April 2022 |
| | | US 11316566 | B2 | 26 April 2022 |
| | | US 11711119 | B2 | 25 July 2023 |
| | | US 2018-0102817 | A1 | 12 April 2018 |
| | | US 2018-0115357 | A1 | 26 April 2018 |
| | | US 2018-0123654 | A1 | 03 May 2018 |
| | | US 2018-0198499 | A1 | 12 July 2018 |
| | | US 2018-0219603 | A1 | 02 August 2018 |
| | | US 2019-0028158 | A1 | 24 January 2019 |
| | | US 2019-0158155 | A1 | 23 May 2019 |
| | | US 2019-0268058 | A1 | 29 August 2019 |
| | | US 2019-0341981 | A1 | 07 November 2019 |
| | | US 2019-0341982 | A1 | 07 November 2019 |
| | | US 2019-0393940 | A1 | 26 December 2019 |
| | | US 2020-0067578 | A1 | 27 February 2020 |
| | | US 2020-0169303 | A1 | 28 May 2020 |
| | | US 2020-0186210 | A1 | 11 June 2020 |
| | | US 2021-0203387 | A1 | 01 July 2021 |
| | | US 2022-0271804 | A1 | 25 August 2022 |
| | | WO 2016-163841 | A1 | 13 October 2016 |
| | | WO 2016-163842 | A1 | 13 October 2016 |
| | | WO 2016-163843 | A1 | 13 October 2016 |
| | | WO 2017-014609 | A1 | 26 January 2017 |
| | | WO 2017-014610 | A1 | 26 January 2017 |
| | | WO 2017-014611 | A1 | 26 January 2017 |
| | | WO 2017-014612 | A1 | 26 January 2017 |

Form PCT/ISA/210 (patent family annex) (July 2022)